# EUROPÄISCHE PATENTSCHRIFT

(11) **EP 3 467 316 B1**
(45) Veröffentlichungstag und Bekanntmachung des Hinweises auf die Patenterteilung: **03.01.2024**
(21) Anmeldenummer: 18020279.8
(22) Anmeldetag: 25.06.2018
(51) Int. Cl.: F04D 13/06, F04D 15/00, F04D 15/02, F24D 3/02, F24D 19/10

(54) **VERFAHREN FÜR DAS ANLAUFEN EINER ZIRKULATIONSPUMPE UND ZUGEHÖRIGE ZIRKULATIONSPUMPE**
METHOD FOR STARTING A CIRCULATION PUMP AND RELATED CIRCULATION PUMP
PROCÉDÉ DE DÉMARRAGE D'UNE POMPE DE CIRCULATION ET POMPE DE CIRCULATION ASSOCIÉE

(43) Veröffentlichungstag der Anmeldung: 10.04.2019
(73) Patentinhaber: WILO SE, 44263 Dortmund (DE)
(72) Erfinder: SCHMIED, Stephan, 44263 Dortmund (DE); GLÜCK, Felix, 44263 Dortmund (DE)
(74) Vertreter: Cohausz Hannig Borkowski Wißgott

(56) Entgegenhaltungen:
- EP-A1- 2 615 384
- JP-A- S60 226 635
- US-A- 4 434 749
- US-A1- 2009 151 801

## Beschreibung

Die Erfindung betrifft allgemein ein Verfahren zum Betreiben einer geregelten Zirkulationspumpe in einem Heizungs- oder Kühlungssystems zu Beginn eines Heiz- oder Kühlprozesses, wobei die Zirkulationspumpe bestimmungsgemäß in einem geregelten Normalbetrieb betrieben wird, in welchem eine Medientemperatur eines Wärmeträgermediums des Heizungs- oder Kühlungssystems verwendet wird. Im Besonderen betrifft die Erfindung die Definition eines kontrollierten Anlaufverhaltens dieser Zirkulationspumpe.

Die japanische Patentanmeldung JP-A 60226635 aus dem Jahr 1985 beschreibt eine temperaturgesteuerte Pumpe in einer Raumheizungsanlage. Nach dem Einschalten der Pumpe mittels einem Schalter wirken zwei Kondensatoren derart, dass die Pumpe mit hohem Drehmoment dreht. Gleichzeitig erhitzt ein Brenner Wasser, welches in einen Speicher gefördert wird. Durch die Verwendung des Wassers zur Raumheizung kühlt dieses ab, strömt durch eine Rücklaufleitung mit einem Temperaturschalter zu einem Expansionstank und von dort wieder zum Brenner, so dass ein Kreislauf gebildet wird. Stellt der Temperaturschalter eine Temperatur von mindestens 50°C fest, öffnet dieser einen Schaltkreis, so dass nur noch einer der beiden Kondensatoren wirkt und die Pumpe ein geringeres Drehmoment liefert, was zur Verringerung des Volumenstroms und zur stärkeren Abkühlung des Rücklaufwassers führt. Ist das Wasser auf 50°C oder weniger abgekühlt, wird der zweite Kondensator wieder hinzugeschaltet. Insgesamt wird durch dieses Verfahren eine Zweipunkt-Reglung ausgeführt, wobei zwischen einem ersten Betriebsmodus mit hohem Drehmoment und einem zweiten Betriebsmodus mit geringem Drehmoment umgeschaltet wird.

Das US Patent 4,434,749 A offenbart eine von einem Motor 11 über einen Riemen 10 angetriebene Kühlwasserpumpe 7 in einem Verbrennungsmotor 1. Die Einstellung der Drehzahl erfolgt in Abhängigkeit der Motortemperatur unter Verwendung eines Komparators, dessen Ausgang auf die Basis eines Transistors wirkt. Der Motor 11 wird ausgehend von einer ersten Drehzahl N1, die im Normalbetrieb des Verbrennungsmotors bei einer Motortemperatur oberhalb einer Grenztemperatur T1 eingestellt wird, auf eine zweite Drehzahl N2 reduziert, wenn die Motortemperatur unter der Grenztemperatur T1 liegt.

Moderne Zirkulationspumpen, wie sie beispielsweise in Gestalt nasslaufender Umwälzpumpenaggregate bestehend aus einer Pumpeneinheit, einem Elektromotor und einer Pumpenelektronik allgemein bekannt sind, beispielsweise aus der deutschen Patentanmeldung DE 102014008971 A1, oder den europäischen Patentanmeldungen EP 2889488 A1 und EP2913532 A1, verfügen zunehmend über eine Vielzahl unterschiedlicher Regelungsarten, in denen sie geregelt werden können, um in den verschiedensten Heizungs- und Kühlungssystemen, d.h. in verschiedenen Anwendungen eingesetzt werden zu können und um dort eine optimale Versorgung der Verbraucher zu gewährleisten.

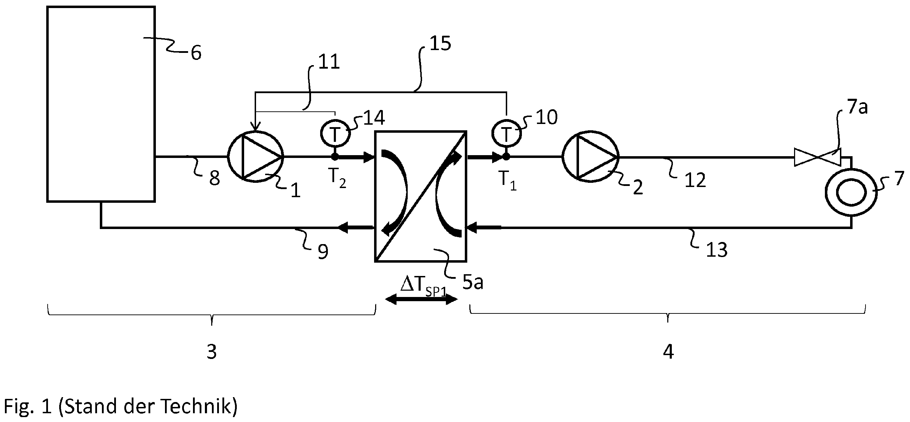

Eine dieser Regelungsarten ist die Differenztemperaturregelung, bei der eine Stellgröße der Zirkulationspumpe, z.B. die Drehzahl oder die Leistung, so geregelt wird, dass sich eine bestimmte Temperaturdifferenz, auch Temperaturabstand oder Temperaturspreizung genannt, zwischen einer ersten und einer zweiten Temperatur einstellt. Eine solche Regelung wird beispielsweise zwischen Primär- und Sekundärseite eines Wärmetauschers oder einer hydraulischen Weiche, oder zwischen Vor- und Rücklauf eines Verbrauchers oder Wärmetauschers genutzt. Beispiele von Heizungs- oder Kühlungsanlagen, in denen eine solche Temperaturdifferenzregelung Anwendung findet, sind in Fig. 1 bis 4 und 18 gezeigt.

So veranschaulicht Fig. 1 beispielsweise ein Heizungssystem mit einem die Zirkulationspumpe 1 umfassenden Erzeugerkreis 3 (Primärkreis), der über eine thermische Kopplung in Gestalt eines Wärmeübertragers 5a mit einem Verbraucherkreis 4 (Sekundärkreis) gekoppelt ist, an welchen im Betrieb des Heizungssystems Wärme übertragen wird. Die erste Temperatur entspricht hier der Temperatur T₁ im Vorlauf 12 des Verbraucherkreises 4 (Sekundärkreis), während die zweite Temperatur der Temperatur T₂ im Vorlauf 8 des Erzeugerkreises 4 (Primärkreis) entspricht. Im Normalbetrieb wird die Zirkulationspumpe 1 so geregelt, dass die erste Temperatur T₁ gleich der um einen Temperaturabstand ΔTₛₒₗₗ reduzierten zweiten Temperatur T₂ ist. Dieser Temperaturabstand ΔTₛₒₗₗ entspricht der Temperaturspreizung ΔT_{SP1}, die im Auslegungsfall über dem Wärmeübertrager 5a von der Primär- zur Sekundärseite vorliegt. Sie ist sowohl durch die Bauform und Qualität des Wärmeübertragers 5a wie auch durch die Betriebsbedingungen (Volumenströme und Temperaturen) beeinflusst. Weicht der Volumenstrom im Verbraucherkreis 4 vom Auslegungswert ab, so ergibt sich eine andere Temperaturdifferenz. Ziel dieser Temperaturdifferenzregelung ist es, identische Volumenströme oder Massenströme im Erzeuger- und Verbraucherkreis 3, 4 zu erhalten, wodurch ein energetisch optimaler Betrieb der Zirkulationspumpe 1 und des Wärmeerzeugers 6 erreicht wird. Im Regelungsnormalbetrieb sollte demnach die erste Temperatur T₁ um die Temperaturspreizung ΔT_{SP1} am Wärmeübertrager 5a kleiner sein als die zweite Temperatur T₂.

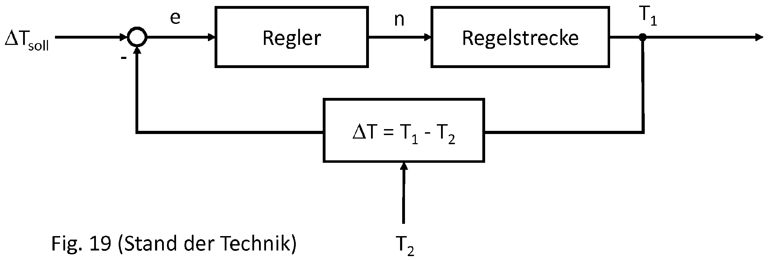

Eine mögliche Regelung der Zirkulationspumpe 1 ist in Fig. 19 veranschaulicht. Hier wird aus der durch die Pumpenregelung beeinflussbaren Temperatur T₁ und der nicht beeinflussbaren Temperatur T₂ die tatsächliche momentane Temperaturdifferenz ΔT gebildet und mit der gewünschten Temperaturdifferenz ΔTₛₒₗₗ verglichen. Die so gebildete Regelabweichung e wird von einem Regler verarbeitet, der daraus die Drehzahl n als Stellsignal für die Pumpe ermittelt. Alternativ könnte auch z.B. die Leistung als Stellsignal für die Pumpe genutzt werden. Der Regler kann zum Beispiel ein PI Regler sein. Es könnte aber auch ein P-Regler, ein PID-Regler, ein nicht linearer Regler oder beliebiger anderer Regler verwendet werden.

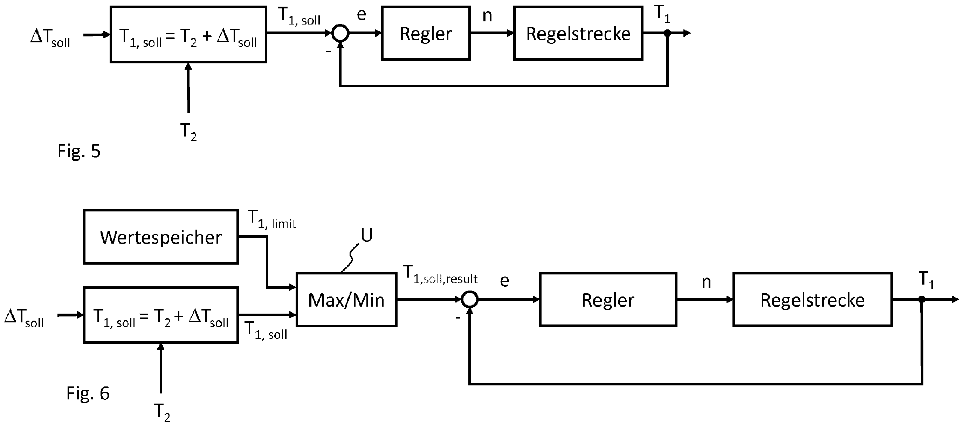

Vollkommen analog dazu kann die Temperaturdifferenzregelung in eine Zieltemperaturregelung überführt werden, wie sie in Fig. 5 dargestellt ist. Die folgenden Ausführungen beziehen sich auf diese Variante eines Temperaturdifferenzreglers. Dabei wird diejenige der beiden Temperaturen, die durch eine Regelung der Pumpe beeinflussbar ist (T₁), als einzuregelnde Zieltemperatur (Folgetemperatur) und deren Sollwert als von der anderen der beiden Temperaturen (hier: T₂) (Führungstemperatur) abhängig definiert.

Mit Hilfe der Temperatur T₂ wird also der Sollwert für die Temperatur T₁ bestimmt.

Die erwarteten Temperaturverhältnisse an den Messstellen T₁ und T₂ gelten allerdings nur für den Fall der vorgesehenen Durchströmung. In bestimmten Situationen kann es vorkommen, dass der Sollwert für die erste Temperatur T₁ aufgrund seiner direkten Abhängigkeit von der zweiten Temperatur T₂ unerwünschte Werte annimmt. Dies ist zum Beispiel der Fall, wenn das Heizungssystem ausgekühlt und die erste und zweite Temperatur infolgedessen im Wesentlichen gleich sind. Hieraus folgt ein niedriger Sollwert für die Temperatur T₁. Daraus folgt am Reglerausgang ein kleines Stellsignal oder ein Stellsignal gleich Null. Dadurch arbeitet die Pumpe nur auf kleinstmöglicher Drehzahl. Das Aufheizen des Heizungssystems wird durch die Temperaturdifferenzregelung verlangsamt.

Selbiges tritt bei einem Kühlsystem auf, nachdem sich das Kältemedium nach dem Abschalten des Systems aufgewärmt hat und die Temperaturen T1, T2 im Wesentlichen gleich sind.

Dieses verschlechterte Anfahrverhalten ist nicht im Sinne der Anlagenrobustheit.

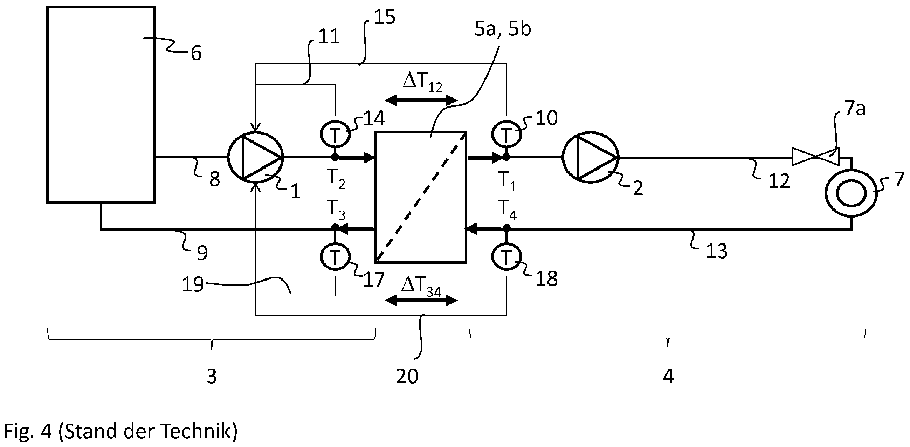

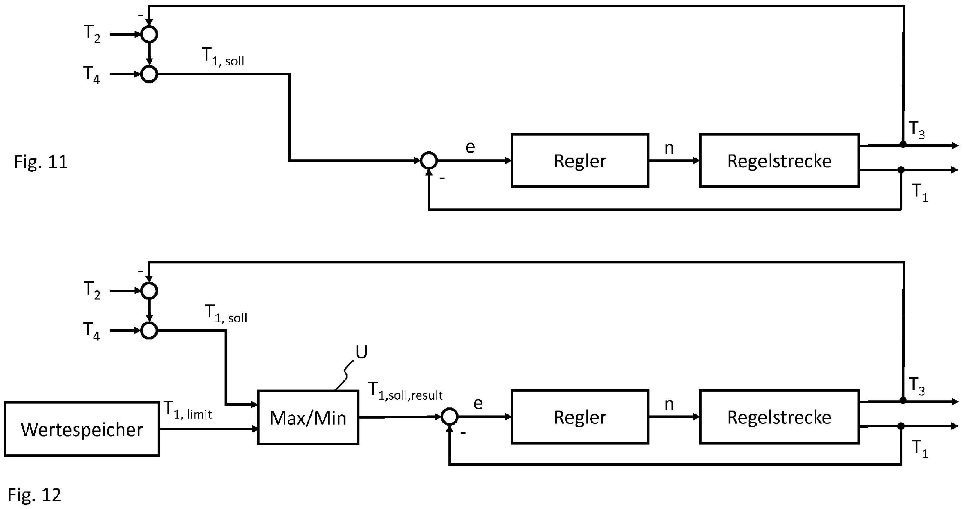

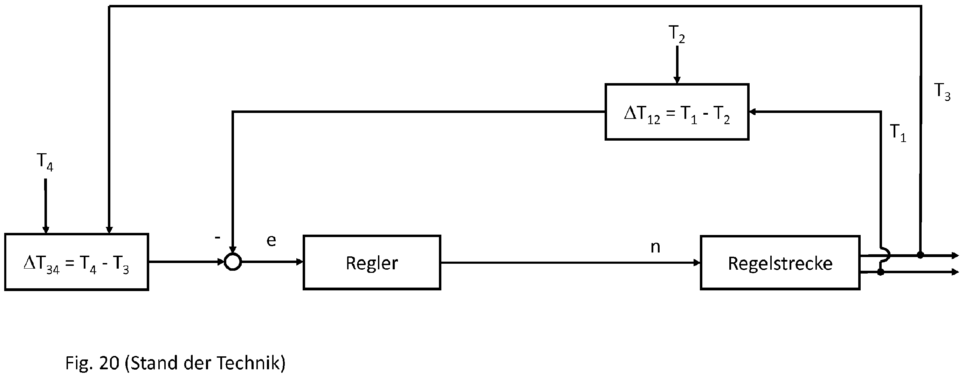

Das gleiche Problem besteht bei Anlagen mit einer hydraulischen Struktur gemäß Fig. 4. Zusätzlich zu den ersten beiden Temperaturen werden hier die Temperaturen T₃ (Temperatursensor 17) im Erzeugerrücklauf 9 und T₄ (Temperatursensor 18) im Verbraucherrücklauf 13 gemessen. Hier erfolgt die Regelung der Zirkulationspumpe 1 im Erzeugerkreis 3 in der Art und Weise, dass die Temperaturdifferenz im Vorlauf ΔT₁₂ zwischen T₁ und T₂ an die Temperaturdifferenz im Rücklauf ΔT₃₄ zwischen T₄ und T₃ angeglichen wird. Der Sollwert für diese Temperaturdifferenzregelung muss nicht vom Anwender eingestellt werden, sondern ergibt sich aus Messwerten. Gleichbedeutend wäre eine Regelung in der Art, dass die Temperaturdifferenz auf der Primärseite ΔT₂₃ der Temperaturdifferenz auf der Sekundärseite ΔT₁₄ entspräche. In beiden Fällen wird der Volumenstrom auf der Primärseite an den Volumenstrom auf der Sekundärseite angeglichen. Die zugehörige Temperaturdifferenzregelung ist in Fig. 20 dargestellt. Sie kann in eine Zieltemperaturregelung überführt werden, wie sie in Fig. 11 gezeigt ist.

Während die Regelung im Normalbetrieb folglich unproblematisch ist, kann das Anfahrverhalten der Zirkulationspumpe 1 in der Praxis problematisch sein, da zu Beginn des Heiz- oder Kühlprozesses noch keine sinnvollen Sollwerte für die Temperatur T₁ vorliegen.

Es besteht die Möglichkeit, den dargestellten Nachteil dadurch zu überwinden, dass zu Beginn des Heiz- oder Kühlprozesses ein Schätzwert für den Sollwert der Temperatur T₁ verwendet wird. Aufgrund der Vielzahl unterschiedlicher Anwendungen und Systeme, in denen die Zirkulationspumpe betrieben werden kann, und der Tatsache, dass der Sollwert von Anwendung zu Anwendung verschieden ist, müsste jedoch eine Vielzahl verschiedener Sollwerte in der Zirkulationspumpe anwendungsspezifisch abgespeichert werden. Zudem müsste ein Nutzer genau angeben, in welchem System und welcher Anwendung (z.B. Verbraucherart) die Zirkulationspumpe betrieben wird. Zusätzlich ändert sich der sinnvolle Schätzwert im Heizfall witterungsabhängig. Alternativ zu hinterlegten Schätzwerten könnte ein Nutzer auch direkt einen eigenen Schätzwert angeben. In der Praxis wird er einen solchen aber kaum angeben können, weil ihm das Heizungs- oder Kühlsystem nicht ausreichend bekannt ist. Beides ist somit unkomfortable und fehleranfällig.

Eine andere Möglichkeit zur Überwindung des Nachteils besteht darin, die Zirkulationspumpe zu Beginn des Heiz- oder Kühlprozesses ungeregelt, z.B. mit maximaler Drehzahl zu betreiben. Dies erfordert jedoch ein Abbruchkriterium, um in den Regelungsnormalbetrieb zu gelangen.

Es ist Aufgabe der vorliegenden Erfindung, ein Verfahren zum Betreiben einer Zirkulationspumpe eines Heizungs- oder Kühlungssystems bereitzustellen, das zu Beginn eines Heiz- oder Kühlprozesses ein kontrolliertes und stabiles Anlaufen der Zirkulationspumpe gewährleistet, ohne dass ein Nutzer nutzungs- oder systemspezifische Angaben für den Betrieb machen muss. Ferner ist es Aufgabe der Erfindung, eine Zirkulationspumpe bereitzustellen, die zur Durchführung des Verfahrens eingerichtet ist.

Diese Aufgabe wird durch ein Verfahren mit den Merkmalen des Anspruchs 1 sowie eine Zirkulationspumpe nach Anspruch 15 gelöst. Vorteilhafte Weiterbildungen sind in den Unteransprüchen gegeben oder werden nachfolgend erläutert.

Bei dem erfindungsgemäßen Verfahren ist vorgesehen, dass die Zirkulationspumpe nach ihrem Einschalten zu Beginn eines Heiz- oder Kühlprozesses in einer Anfahrphase anders als in dem auf die Anfahrphase folgenden Normalbetrieb betrieben wird, wobei während der Anfahrphase zumindest eine Medientemperatur bestimmt wird und ein Umschalten von der Anfahrphase auf den Normalbetrieb dann erfolgt, wenn zumindest ein die Medientemperatur berücksichtigendes Temperaturkriterium erfüllt ist.

Es ist erfindungsgemäß somit vorgesehen, die Zirkulationspumpe in zwei Modi zu betreiben, von denen ein erster Betriebsmodus der bestimmungsgemäße, geregelte Normalbetrieb ist und der zweite Betriebsmodus die Anfahrphase nach dem Einschalten der Zirkulationspumpe definiert, d.h. dem Normalbetrieb zeitlich vorgelagert ist. Durch diesen zweiten Betriebsmodus kann ein sicheres, stabiles Anfahren der Zirkulationspumpe erreicht werden. Eine Umschalteinrichtung, die vorzugsweise Teil der Zirkulationspumpe ist, schaltet den Betrieb der Zirkulationspumpe von der Anfahrphase auf den Normalbetrieb um, wenn ein bestimmtes Temperaturkriterium erfüllt ist. Im Rahmen der Prüfung, ob das Temperaturkriterium erfüllt ist, wird die Medientemperatur ausgewertet, so dass erkannt werden kann, wann stabile Systemverhältnisse für das Umschalten vorliegen.

Gemäß einer Ausführungsvariante kann die Zirkulationspumpe in der Anfahrphase ungeregelt, d.h. mit einer bestimmten konstanten Drehzahl, beispielsweise mit maximaler Drehzahl betrieben werden. Das Verfahren ist dadurch besonders einfach zu realisieren.

Ein Kriterium für den Übergang zum Normalbetrieb könnte bei einem solchen Betrieb mit konstanter Drehzahl beispielsweise der Ablauf eines bestimmten Zeitraums sein. Häufig ist jedoch der Betrieb mit maximaler Drehzahl energetisch ineffizient, so dass bei einem späten Umschalten vermeidbare Energieverluste vorliegen. Ist der Zeitraum demgegenüber zu kurz gewählt, könnte gegebenenfalls noch immer kein sinnvoller Sollwert für den Normalbetrieb vorliegen. Durch die Verwendung des erfindungsgemäßen Temperaturkriteriums kann bei einem ungeregelten Betrieb der Zirkulationspumpe ein optimaler Umschaltzeitpunkt verwendet werden, so dass Energie gespart wird und gleichzeitig ein sicheres Betriebsverhalten beim Übergang in den Normalbetrieb gewährleistet ist.

Gemäß einer Ausführungsvariante kann die Zirkulationspumpe in der Anfahrphase geregelt betrieben werden, wobei ein Sollwert für diese Regelung von der Zirkulationspumpe selbst anhand des Heiz- oder Kühlprozesses ermittelt wird.

Die Zirkulationspumpe fördert ein Wärmeträgermedium des Heizungs- oder Kühlungssystems, worunter auch ein Kühlmittel zu verstehen ist. Die Medientemperatur kann die Temperatur dieses Wärmeträgermediums oder eines damit thermisch gekoppelten anderen Wärmeträgermediums sein.

Vorzugsweise kann im Normalbetrieb eine Temperaturregelung der Zirkulationspumpe durchgeführt werden. Hierbei kann zum Beispiel auf eine Soll-Medientemperatur oder eine Soll-Mediendifferenztemperatur geregelt werden. Das erfindungsgemäße Verfahren ist jedoch auch bei anderen Regelungsarten einsetzbar, die in irgendeiner Form eine Medientemperatur berücksichtigen.

Nach einer alternativen Ausführungsvariante kann der Verlauf der in der Anfahrphase bestimmten Medientemperatur mit zumindest einem erwarteten Temperaturverlauf verglichen werden. Vorzugsweise ist dabei das Temperaturkriterium erfüllt, wenn der Verlauf im Wesentlichen dem erwarteten Temperaturverlauf entspricht.

Beispielsweise können in zumindest einem vergangenen Normalbetrieb erfasste Temperaturwerte der Medientemperatur den erwarteten Temperaturverlauf bilden. Diese erfassten Temperaturwerte bilden historische Werte die abgespeichert und ausgewertet werden können. Dabei kann das Temperaturkriterium dann erfüllt sein, wenn der Verlauf der in der aktuellen Anfahrphase bestimmten Medientemperatur im Wesentlichen den historischen Werten entspricht.

Von Vorteil ist es, wenn die im Normalbetrieb erfassten Temperaturwerte der Medientemperatur ausgewertet werden und daraus zumindest ein Grenzwert ermittelt wird. Dieser kann dann für das Temperaturkriterium verwendet werden, wie nachfolgend noch erläutert wird.

Wie bereits erwähnt, kann in der Anfahrphase eine Temperaturregelung der Zirkulationspumpe durchgeführt werden. Vorzugsweise wird hier der Grenzwert als Sollwert für die Temperaturregelung in der Anfahrphase eingestellt. Der Grenzwert verhindert, dass die Regelung einen unsinnigen Sollwert annimmt und gewährleistet somit Regelungsstabilität zu Beginn eines Heiz- oder Kühlprozesses und damit ein sicheres Anfahren bzw. Hochfahren der Zirkulationspumpe. Der Grenzwert berücksichtigt den vergangenen Betrieb des Heizungs- oder Kühlungssystems, so dass die Zirkulationspumpe bei der nächsten Anfahrphase sogleich nahe an dem energetisch günstigsten Betriebspunkt betrieben werden kann, der beim letzten Betrieb vorlag.

Wird im Normalbetrieb eine Temperaturregelung durchgeführt, bei der der Sollwert ein zu erreichender Wert einer ersten Temperatur eines Wärmeträgermediums des Heizungs- oder Kühlungssystems ist und die erste Temperatur abhängig von einer zweiten Temperatur ist, ist es sinnvoll, im Betrieb der Zirkulationspumpe Werte zumindest einer der beiden Temperaturen, vorzugsweise beider Temperaturen zu erfassen, und daraus den Grenzwert zu ermitteln.

Im Rahmen des erfindungsgemäßen Verfahrens kann der Betrieb der Zirkulationspumpe grundsätzlich fremdgesteuert sein, d.h. von außerhalb der Zirkulationspumpe erfolgen. Insbesondere kann dabei eine zentrale Steuerung des Heizungs- oder Kühlungssystems je nach Bedarf des oder der Verbraucher die Zirkulationspumpe ein- oder ausschalten oder drehzahlregeln, geeigneterweise über einen entsprechenden Steuereingang an der Zirkulationspumpe. Alternativ kann die Zirkulationspumpe anhand einer von ihr selbst gemessenen Temperatur, vorzugsweise im Bereich der Heizquelle (Brenner) oder der Kühlquelle (Chiller) eigenständig erkennen, ob sich die Heizungsanlage oder Kühlungsanlage eingeschaltet hat und somit Bedarf besteht, das Wärmeträgermedium zu zirkulieren.

Erfolgt nach dem Ausschalten der Zirkulationspumpe im Falle eines Heizungssystems ein Auskühlen der Förderleitungen, so verhindert der Grenzwert, dass der Sollwert zu tief absinkt bzw. unter ihn sinkt. Erfolgt nach dem Ausschalten der Zirkulationspumpe im Falle eines Kühlungssystems ein Aufwärmen der Förderleitungen, so verhindert der Grenzwert, dass der Sollwert zu hoch ansteigt bzw. über ihn steigt. In beiden Fällen wird erfindungsgemäß eine Limitierung des Sollwerts auf den Grenzwert vorgenommen, die beim nächsten Betrieb der Zirkulationspumpe wirkt. Der Grenzwert ist somit im Heizfall eine untere Temperaturgrenze oder im Kühlfall eine obere Temperaturgrenze.

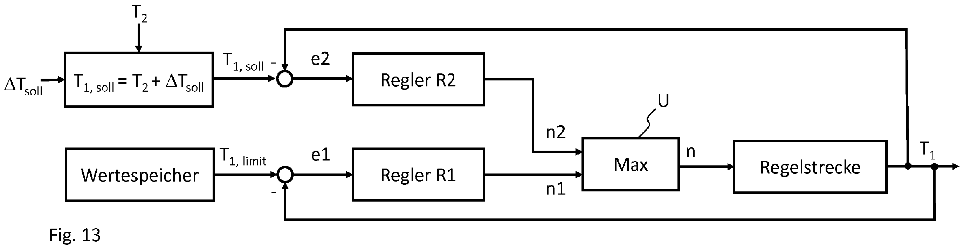

Bei der Temperaturregelung kann es sich um eine Konstanttemperaturregelung mit variablem Sollwert handeln, d.h. eine solche Regelung, deren Regelungsstruktur eine Ist-Temperatur als Regelungsgröße negativ auf den Reglereingang rückkoppelt, wo sie von einer Führungsgröße in Gestalt eines veränderlichen Temperatursollwerts abgezogen wird, um den somit entstehenden Regelfehler auszuregeln (Fig 13). Der Temperatursollwert kann von einer beliebigen Größe oder auch von mehreren Größen abhängig sein, wie z.B. einem Volumenstrom oder Massestrom, z.B. im Verbraucherkreis, einer elektrischen Leistungsaufnahme oder einer Druckdifferenz der Zirkulationspumpe oder einer anderen Pumpe, oder auch von einer anderen Temperatur wie z.B. einer Außentemperatur, d.h. der Temperatur außerhalb des Gebäudes, in der sich die Heizungs- oder Kühlungsanlage befindet, veränderlich sein. Der Grenzwert ist in diesem Fall ein Grenzwert für die einzuregelnde Konstanttemperatur und somit durch eine Absoluttemperatur T gebildet.

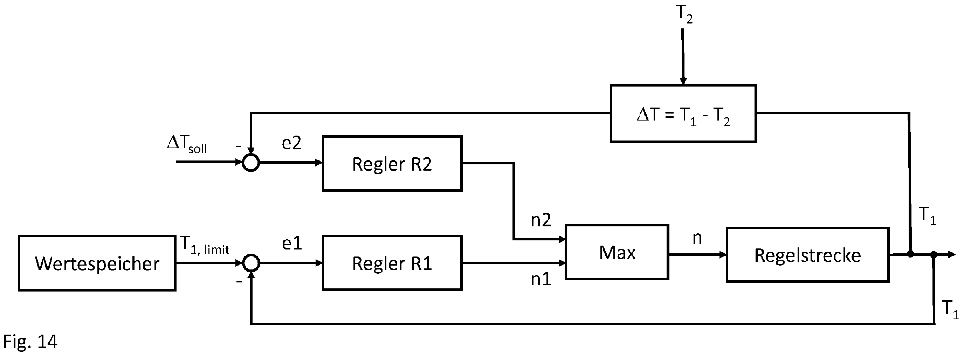

Alternativ kann es sich bei der Temperaturregelung um eine Differenztemperaturregelung handeln, d.h. eine solche Regelung, deren Regelungsstruktur eine Ist-Temperaturdifferenz als Regelungsgröße negativ auf den Reglereingang rückkoppelt, wo sie von einer Führungsgröße in Gestalt eines fest parametrierten oder veränderlichen Differenztemperatursollwert abgezogen wird, um den somit entstehenden Regelfehler auszuregeln. Da die Temperatur T₁ jedoch in Form einer Absoluttemperaturregelung begrenzt werden soll, sind hierfür zwei getrennte Regler umzusetzen. Die Begrenzung erfolgt am Ausgang der beiden Regler: als Stellsignal wird das höhere der beiden Reglerausgänge verwendet (Fig. 14).

Eine besonders einfache Implementierung des erfindungsgemäßen Verfahrens bei einer Differenztemperaturregelung lässt sich erreichen, wenn diese als Konstanttemperaturregelung (Zieltemperaturregelung) mit variablem Sollwert ausgebildet ist. In diesem Fall ist es möglich, den Sollwert direkt zu begrenzen, bevor das Signal in der Regelung verarbeitet wird (Fig. 6).

Der Sollwert für die erste Temperatur entspricht dabei der um den gewünschten oder definierten Temperaturabstand reduzierten oder erhöhten zweiten Temperatur. Der Sollwert kann aber auch als von einer oder mehreren weiteren Temperaturen abhängig definiert sein. Ein Beispiel dafür ist die für die Systemstruktur nach Fig. 4 verwendete Angleichung zweier Temperaturdifferenzen. Durch die Überführung in eine Zieltemperaturregelung mit von mehreren Temperaturen abhängigem Sollwert, kann auch hier wieder die Begrenzung des Sollwerts erfolgen, bevor das Signal in der Regelung verarbeitet wird (Fig. 12).

In einer Ausführungsvariante, bei der der Sollwert der Temperaturregelung ein zu erreichender Wert einer ersten Temperatur eines Wärmeträgermediums des Heizungs- oder Kühlungssystems und die erste Temperatur abhängig von einer zweiten Temperatur ist, werden im Betrieb der Zirkulationspumpe Werte zumindest einer der beiden Temperaturen erfasst und aus den erfassten Werten, insbesondere aus einem oder aus beiden dieser historischen Signalverläufe der Temperaturen der Grenzwert ermittelt. Vorzugsweise wird dieser anschließend während des nächsten Anfahrvorgangs der Zirkulationspumpe als Sollwert für die erste Temperatur verwendet.

Geeigneterweise werden die im Normalbetrieb erfassten Temperaturwerte nur über einen begrenzten, fortschreitenden Zeitraum hinweg erfasst. So wird der Speicher- und Auswertungsaufwand minimiert. Da es sich bei dem Zeitraum ferner um ein mit der Zeit fortschreitendes, d.h. gleitendes Zeitfenster handelt, wird der Grenzwert stets nur aus Temperaturwerten jüngerer Historie bestimmt und nicht aus lange vergangenen Werten. Dies hat den Vorteil, dass stets ein aktueller Grenzwert verwendet wird, von dem man annehmen kann, dass er richtig ist, bzw. bei dem ausgeschlossen werden kann, dass er aufgrund geänderter Witterungsbedingungen oder aufgrund einer zwischenzeitlich erfolgten baulichen Veränderung des Heizungs- oder Kühlungssystems oder einer zwischenzeitlich erfolgten gravierenden Veränderung sämtlicher Stellventile im System, falsch ist.

Geeigneterweise ist der Zeitraum abhängig von der Anwendung, in der sich die Zirkulationspumpe befindet. So kann der Zeitraum beispielsweise im Falle der Regelung einer Erzeugerkreispumpe zur Versorgung von Verbraucherkreisen zwischen 6min und 24min, vorzugsweise etwa 12 min betragen. Im Falle einer Regelung einer Speicherladepumpe zur Trinkwasseraufheizung kann der Zeitraum zwischen einer und drei, vorzugsweise zwei Stunden betragen.

Vorteilhafterweise wird das Fortschreiten des Zeitraums angehalten wird, solange die Zirkulationspumpe gestoppt ist. Somit werden keine Werte erfasst, die im Heizfall den Abkühlvorgang bzw. im Kühlfall den Aufwärmvorgang des Heizungs- oder Kühlungssystems betreffen.

Gemäß einer Ausführungsvariante kann vorgesehen sein, dass das Temperaturkriterium erfüllt ist, wenn die in der aktuellen Anfahrphase bestimmte Medientemperatur im Heizfall mindestens größer oder im Kühlfall mindestens kleiner als der Grenzwert wird. Es erfolgt somit ein Vergleich des Istwerts der Medientemperatur mit dem Grenzwert, der im Heizfall eine Minimaltemperatur, im Kühlfall eine Maximaltemperatur ist. Wird im Heizfall diese Minimaltemperatur überschritten oder im Kühlfall diese Maximaltemperatur unterschritten, erfolgt die Umschaltung in den Normalbetrieb.

Gemäß einer anderen Ausführungsvariante, bei der eine Temperaturregelung im Normalbetrieb mit variablem Sollwert erfolgt, d.h. einem Sollwert, der von der Medientemperatur abhängt, kann vorgesehen sein, dass das Temperaturkriterium erfüllt ist, wenn der Sollwert der Temperaturregelung im Normalbetrieb den Grenzwert im Falle eines Heizungssystems überschreitet oder im Falle eines Kühlungssystems unterschreitet. Aufgrund der Abhängigkeit des Sollwerts von der Medientemperatur, insbesondere von der zweiten Temperatur, berücksichtigt auch dieses Temperaturkriterium die Medientemperatur.

Im Falle eines Heizungssystems sind insbesondere folgende Ausführungsvarianten denkbar, bei denen der erfindungsgemäße Grenzwert Verwendung finden kann:
Gemäß einer Ausführungsvariante kann es sich bei der ersten Temperatur um die Temperatur im Vorlauf eines Verbraucherkreises handeln, während die zweite Temperatur diejenige Temperatur im Vorlauf eines Erzeugerkreises ist. Diese Anordnung eignet sich besonders, wenn der Erzeugerkreis und der Verbraucherkreis durch einen Wärmeübertrager miteinander thermisch gekoppelt sind. Die Zirkulationspumpe ist dabei differenztemperaturgeregelt, um eine bestimmte Temperaturdifferenz über dem Wärmeübertrager vom Erzeugerkreis zum Verbraucherkreis einzustellen. Sie ist im Erzeugerkreis, vorzugsweise in deren Vorlauf angeordnet, um ein Wärmeträgermedium von einer Heizquelle zu dem Wärmeübertrager zu fördern. Dies hat den Vorteil, dass ein in der Pumpe integrierter Temperatursensor, der die Temperatur des geförderten Mediums in der Pumpe misst, zur Bestimmung der zweiten Temperatur verwendet werden kann. Die Zirkulationspumpe kann aber auch im Rücklauf liegen. In diesem Fall sind beide Temperatursensoren extern zur Pumpe angeordnet. Durch die Temperaturdifferenzregelung wird der Erzeugervolumenstrom an den veränderlichen Verbrauchervolumenstrom angepasst.

Gemäß einer anderen Ausführungsvariante kann es sich bei der ersten Temperatur um die Temperatur im Rücklauf eines Erzeugerkreises handeln, während die zweite Temperatur diejenige Temperatur im Rücklauf eines Verbraucherkreises ist. Der Erzeugerkreis und der Verbraucherkreis sind dabei durch eine hydraulischen Weiche miteinander thermisch und stofflich gekoppelt. Die Zirkulationspumpe ist dabei differenztemperaturgeregelt, um eine bestimmte Temperaturdifferenz über der hydraulischen Weiche vom Verbraucherkreis zum Erzeugerkreis einzustellen. Sie ist im Erzeugerkreis, vorzugsweise in deren Rücklauf angeordnet, um ein Wärmeträgermedium von dem Wärmeübertrager zu der Heizquelle zu fördern. Dies hat den Vorteil, dass ein in der Pumpe integrierter Temperatursensor, der die Temperatur des geförderten Mediums in der Pumpe misst, zur Bestimmung der zweiten Temperatur verwendet werden kann. Die Zirkulationspumpe kann aber auch im Vorlauf liegen. In diesem Fall sind beide Temperatursensoren extern zur Pumpe angeordnet. Durch die Temperaturdifferenzregelung wird das Überströmen vom Erzeugervorlauf in den Erzeugerrücklauf auf ein geringes, kontrolliertes Maß begrenzt.

Gemäß einer weiteren Ausführungsvariante kann es sich bei der ersten Temperatur um die Temperatur im Vorlauf eines Verbraucherkreises handeln, bei der zweiten Temperatur um diejenige Temperatur im Vorlauf eines Erzeugerkreises, bei einer weiteren, dritten Temperatur um die Rücklauftemperatur im Erzeugerkreis und bei einer weiteren, vierten Temperatur um die Rücklauftemperatur im Verbraucherkreis. Diese Anordnung eignet sich besonders, wenn der Erzeugerkreis und der Verbraucherkreis durch einen Wärmeübertrager oder einer hydraulische Weiche miteinander gekoppelt sind. Die Zirkulationspumpe ist dabei in der Art geregelt, dass jeweils zwei Temperaturdifferenzen gleich werden. Dabei kann z.B. die Temperaturdifferenz zwischen der vierten Temperatur (T4) und der dritten Temperatur (T3) als Sollwert für die Temperaturdifferenz zwischen der ersten (T1) und zweiten Temperatur (T2) verwendet werden. Diese Ausführungsvariante hat den Vorteil, dass ein Volumenstromabgleich zwischen Erzeuger und Verbraucherkreis stattfindet, ohne dass ein geeigneter Sollwert für das ΔT vorgegeben werden muss. Die Zirkulationspumpe kann in dieser Variante im Erzeugerkreis im Vorlauf oder Rücklauf angeordnet sein, um ein Wärmeträgermedium von einer Heizquelle zu dem Wärmeübertrager bzw. zur hydraulischen Weicher zu fördern oder umgekehrt. Dabei kann ein vorzugsweise in der Pumpe integrierter Temperatursensor, der die Temperatur des geförderten Mediums in der Pumpe misst, zur Bestimmung einer der Temperaturen für die Regelung verwendet werden.

Gemäß einer weiteren Ausführungsvariante kann es sich bei der ersten Temperatur um die Temperatur des Rücklaufs eines Verbrauchers handeln, während die zweite Temperatur diejenige Temperatur des Vorlaufs des Verbrauchers ist. Der Verbraucher kann in diesem Fall ein in einem Trink- oder Brauchwasserspeicher (Wärmespeicher) integrierter Wärmeübertrager sein, der den Speicher aufheizt. Der Verbraucher kann aber auch ein Heizkreis mit ventilgesteuerten Heizkörpern sein. Diese können im parallelen Zweirohrsysten, im sogenannten Tichelmannsystem oder im Einrohrsystem angebunden sein. Die Zirkulationspumpe kann in dieser Ausführungsvariante im Vorlauf oder Rücklauf angeordnet sein, um ein Wärmeträgermedium von einer Heizquelle zu dem Verbraucher oder umgekehrt zu fördern. Sie wird mit einer Temperaturdifferenzregelung betrieben, so dass sich ein bestimmter Temperaturunterschied über dem Verbraucher einstellt.

Gemäß einer weiteren Ausführungsvariante kann es sich bei der ersten Temperatur um die Temperatur des Rücklaufs eines Speicherladekreises handeln, während die zweite Temperatur die Temperatur des Vorlaufs des Speicherladekreises ist. Zusätzlich werden eine dritte Temperatur im untere Bereich des Speichers und eine vierte Temperatur im oberen Bereich des Speichers erfasst. Die Zirkulationspumpe kann in dieser Ausführungsvariante im Vorlauf oder Rücklauf angeordnet sein, um ein Wärmeträgermedium von einer Heizquelle zum Speicher oder umgekehrt zu fördern. Es werden mehrere Temperaturdifferenzen zwischen den genannten Temperaturen berücksichtigt, so dass der Volumenstrom an unterschiedliche Temperaturen im Speicher angepasst werden kann.

Gemäß einer weiteren Ausführungsvariante kann es sich bei der ersten Temperatur um die Temperatur des Rücklaufs eines Fußbodenheizkreises handeln, während die zweite Temperatur die Temperatur des Vorlaufs des Fußbodenheizkreises ist. Zusätzlich wird als dritte Temperatur die Raumtemperatur erfasst. Das Regelziel der Zirkulationspumpe ist hierbei die Einstellung der gewünschten Raumtemperatur, wobei eine bestimmte Temperaturdifferenz zwischen Vorlauf und Rücklauf des Fußbodenheizkreises nicht unterschritten werden soll. Die Zirkulationspumpe ist in dieser Ausführungsvariante vorzugsweise im Rücklauf angeordnet, um ein Wärmeträgermedium durch den Fußbodenheizkreis zu fördern. Dies hat den Vorteil, dass ein in der Pumpe integrierter Temperatursensor, der die Temperatur des geförderten Mediums in der Pumpe misst, zur Bestimmung der ersten Temperatur verwendet werden kann. Sind mehrere Fußbodenheizkreise parallelgeschaltet, ergeben sich unterschiedliche Rücklauftemperaturen in dein Heizkreisen. Die Vorlauftemperatur ist hingegen für alle Kreise gleich und braucht ggf. nur einmal gemessen werden und kann von allen Pumpen verwendet werden. Die Zirkulationspumpe kann aber auch im Vorlauf liegen. In diesem Fall kann für jeden Fußbodenkreis ein externer Sensor zur Bestimmung der ersten Temperatur angeordnet sein.

Handelt es sich um ein Kühlungssystem, in dem die Zirkulationspumpe Anwendung findet, so gelten die vorgenannten Ausführungen sinngemäß ebenfalls, jedoch mit der Maßgabe, dass die Temperaturdifferenz ein umgekehrtes Vorzeichen hat und der Regelsinn umgekehrt ist.

Gemäß einer Ausführungsvariante kann der Grenzwert nur aus der ersten Temperatur ermittelt werden. Die erste Temperatur kann jedoch in Zeiten schwacher Wärmeabnahme bzw. Kühlleistungsabnahme fast bis auf den aktuellen Wert der zweiten Temperatur ansteigen, weil der Wärmeübertrager sehr schwach belastet ist und bzw. oder weil der Volumenstrom in der Zirkulationspumpe nicht weit genug abgesenkt werden kann. Dies würde zu einem ungünstigen Grenzwert führen.

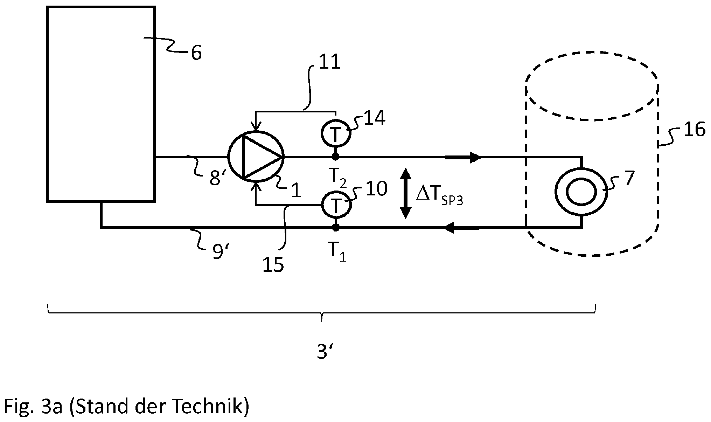

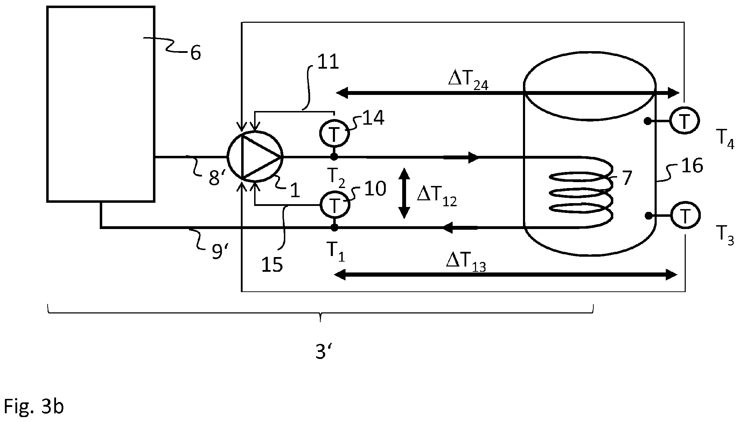

Gemäß einer anderen Ausführungsvariante wird der Grenzwert nur aus der zweiten Temperatur ermittelt. Die zweite Temperatur kann jedoch kurzzeitig sehr hohe Werte annehmen , die zu einem ungünstigen Grenzwert führen können. Dies ist zum Beispiel bei einem Heizungssystem der Fall, das eine Kombination der Ausführungsvarianten der Figuren 1 und 3 ist, d.h. einerseits Verbraucher wie Heizkörper oder Heizzonen einer Fußbodenheizung, und andererseits einen aufzuheizenden Wärmespeicher (Speichertank für Brauch- und/ oder Trinkwasser) umfasst. Die Vorlauftemperatur im Erzeugerkreis vor dem Wärmeübertrager kann kurz nach dem Start stark erhöht sein, wenn kurz zuvor ein Verbraucher wie der Wärmespeicher mit hoher Vorlauftemperatur aus demselben Wärmeerzeuger versorgt wurde. Zum Beispiel erfolgt zunächst die Ladung des Wärmespeichers. Nachdem der Wärmespeicher geladen ist, startet die zweite Pumpe (Zubringerpumpe) zur Versorgung der anderen Verbraucher wie beispielsweise Heizzonen einer Fußbodenheizung, die mit dem Wärmeübertrager entkoppelt sind. Die Temperatur des Wärmeerzeugers kühlt erst nur langsam ab, so dass kurzzeitig die zweite Temperatur deutlich höher als erforderlich ist. Für die Bestimmung des erfindungsgemäßen Grenzwerts, ist es erforderlich, diese Temperaturspitzen zu eliminieren oder zu dämpfen.

Dies kann beispielsweise durch eine Filterung der Temperaturwerte, z.B. eine gleitende Mittelwertbildung erfolgen. Da diese Filterung jedoch Zeit benötigt, wird das Antwortverhalten des Reglers gedämpft.

Am ersten Temperatursensor für die erste Temperatur, der in Wärmeübertragungsrichtung betrachtet nach dem Wärmeübertrager angeordnet ist, tritt diese Temperaturüberhöhung nicht so stark und zeitlich versetzt auf. Der Wärmeübertrager bewirkt somit bereits eine thermische Dämpfung, so dass die erste Temperatur nicht im gleichen Maße und nicht gleichzeitig ungewöhnlich hoch ist. Die erste Temperatur folgt der zweiten Temperatur abgedämpft, so dass vorteilhafterweise anstelle einer mathematischen Filterung zusätzlich zur zweiten Temperatur die erste Temperatur für die Ermittlung des Grenzwerts verwendet werden kann. Vorzugsweise werden im Betrieb der Zirkulationspumpe somit Werte beider Temperaturen, d.h. sowohl der ersten als auch der zweiten Temperatur über den Zeitraum hinweg erfasst. Der Grenzwert wird dann aus beiden Temperaturen ermittelt.

Vorzugsweise wird dabei der zweite Temperaturwert mit dem ersten Temperaturwert verglichen, wobei die zweite Temperatur bei diesem Vergleich um den gewünschten Temperaturabstand zur zweiten Temperatur korrigiert wird. Es wird dann im Heizfall der kleinere der beiden Werte, im Kühlfall der größere der beiden Werte weiterverwendet, so dass sich über den Erfassungszeitraum eine Reihe von Minimalwerten bzw. Maximalwerten ergibt. Hierdurch werden kurzzeitig ungewöhnlich hohe Messwerte ausgeblendet und wirken sich nicht auf die Ermittlung des Grenzwerts aus.

In einer Variante werden zusätzlich zu den Temperaturen T₁ und T₂ eine oder mehrere weitere Temperaturwerte verglichen. Es wird dann im Heizfall der kleinste der Werte, im Kühlfall der größte der Werte weiterverwendet.

Gemäß einer Ausführungsvariante kann im Heizfall von den Minimalwerten der größte Wert oder im Kühlfall von den Maximalwerten der kleinste Wert als Grenzwert verwendet werden. Dies stellt sicher, dass der Sollwert beim Anfahren im Heizfall nicht zu niedrig und im Kühl nicht zu hoch ist, so dass die Versorgungssicherheit gewährleistet ist.

Wie bereits erwähnt, wird nicht die gesamte Historie der Temperaturverläufe der ersten und zweiten Größe für die Ermittlung des Grenzwerts herangezogen, sondern nur ein begrenzter, fortschreitender Zeitraum. Dieser Zeitraum bildet quasi ein Zeitfenster der Historie. Es wird somit nur der größte Wert dieses Zeitraums als Grenzwert verwendet, d.h. historisch betrachtet, ein lokal größter Wert. Denn da sich der Wärmebedarf des Heizungssystems aufgrund der den Verbrauchern im System zugeordneten, selbstregelnden Ventile (Thermostatventile, Stellglieder) ständig ändert und die vom Erzeuger gelieferte Vorlauftemperatur sich aufgrund der Witterung oder der anfordernden Verbraucher ständig ändert, schwanken die erste und zweite Temperatur entsprechend diesem Wärmebedarf. Würde der absolut größte Wert verwendet werden, würde der Grenzwert auf einen derart hohen Wert gesetzt werden, der zur Deckung eines aktuellen Bedarfs beim erneuten Anfahren der Zirkulationspumpe nicht notwendig ist. Durch die Verwendung eines Zeitfensters und des darin befindlichen lokalen Maximums der Minimalwerte wird ein energetisch optimaler Sollwert beim Anfahren der Zirkulationspumpe verwendet.

Beim Kühlen gilt umgekehrt, dass sich ohne zeitliche Beschränkung zu niedrige Grenzwerte ergäben, die im Betrieb ggf. nicht mehr erreicht würden.

Sofern die Zirkulationspumpe für einen längeren Zeitraum, beispielsweise im Falle eines Heizungssystems über die Sommermonate, stillgestanden hat, ist anzunehmen, dass sich sämtliche selbstgeregelten oder auch manuellen Stellventile zwischenzeitlich verändert haben und somit der Wärmebedarf bzw. die Anlagenkurve stark verändert hat, so dass sich die zuletzt erfassten Temperaturwerte stark von denjenigen Werten unterscheiden werden, die bei dem nächsten Betrieb der Zirkulationspumpe erfasst werden würden. Der aus den letzten Temperaturwerten ermittelte Grenzwert wird folgemäßig keine energetisch optimale Einstellung der Zirkulationspumpe zu Beginn des Heiz- bzw. Kühlprozesses erreichen. Um diese Ungenauigkeit schnell zu kompensieren, kann der Grenzwert während des nächsten Anfahrvorgangs aufgrund der dann während dieses Anfahrvorgangs neu erfasster und ausgewerteter Temperaturwerte aktualisiert und unmittelbar als neuer Sollwert verwendet werden. Der Grenzwert wird somit dynamisch angepasst.

Bei Eintritt der in dem Temperaturkriterium festgelegten Bedingung wird in einen geregelten Normalbetrieb übergegangen. Dieser Normalbetrieb ist jener Betrieb, der für die Zirkulationspumpe in der jeweiligen Anwendung, in der sie betrieben wird, bestimmungsgemäß vorgesehen ist. In diesem geregelten Normalbetrieb wirkt die erfindungsgemäße Begrenzung eines Sollwerts des geregelten Normalbetriebs auf den Grenzwert nicht bzw. nicht mehr. Das Erfüllen des Temperaturkriteriums bewirkt somit, dass auf eine Betriebsart, insbesondere Regelungsart der Zirkulationspumpe, insbesondere eine Betriebsart ohne Sollwertbegrenzung gewechselt wird.

Bei dem geregelten Normalbetrieb bzw. der genannten anderen Betriebsart kann es sich beispielsweise um eine konventionelle Temperaturregelung, insbesondere eine Konstanttemperatur- oder eine Differenztemperaturregelung handeln. Diese kann im Wesentlichen identisch zur Temperaturregelung während der erfindungsgemäßen Anfahrphase sein, bis auf die Tatsache, dass der Sollwert, den die Regelung berechnet, nicht auf den Grenzwert begrenzt wird. Somit kann geeigneterweise der Normalbetrieb der Temperaturregelung in der Anfahrphase der Zirkulationspumpe entsprechen, wobei jedoch keine Begrenzung des Sollwerts der Temperaturregelung auf den Grenzwert erfolgt. Mit anderen Worten wird in diesem Fall bei Eintritt der Bedingung die Sollwertbegrenzung deaktiviert.

Untersuchungen haben gezeigt, dass das erfindungsgemäße Verfahren nicht auf Temperaturregelungen als Normalbetrieb bei der Zirkulationspumpe beschränkt ist. Vielmehr kann das Verfahren auch bei jeder beliebigen Regelungsart eingesetzt werden, beispielsweise auch bei einer Differenzdruckregelung oder bei einer Volumenstromregelung. Somit kann der geregelte Normalbetrieb, in den nach dem Anfahren der Zirkulationspumpe gewechselt wird, eine solche Differenzdruckregelung oder Volumenstromregelung sein. Diese Regelungsarten sind dem Fachmann an sich bekannt.

In einer Ausführungsvariante mit Temperaturbegrenzung im Anfahrbetrieb und mit Temperatur(-differenz) regelung im Normalbetrieb, ergibt sich der Wechsel in den Normalbetrieb einzig durch Vergleich der Solltemperatur T_{1,soll} mit dem Grenzwert T_{1,lim} indem im Heizfall der größer Wert bzw. im Kühlfall der kleinere Wert vom Regler verwendet wird. Dadurch wechselt die Zirkulationspumpe erneut in den Anfahrbetrieb, wenn das Temperaturkriterium nicht mehr erfüllt ist.

In einer anderen Ausführungsvariante mit Temperaturbegrenzung im Anfahrbetreib und mit beliebiger Regelungsart im Normalbetrieb, ergibt sich der Wechsel in den Normalbetrieb einzig durch den Vergleich der Ausgangssignale der Regelung für den Normalbetrieb mit dem Ausgangssignal der Regelung für den Anfahrbetrieb indem der größere Wert weiterverwendet wird. Dadurch wechselt die Zirkulationspumpe erneut in den Anfahrbetrieb, wenn das Temperaturkriterium nicht mehr erfüllt ist.

In einer Ausführungsvariante mit ungeregeltem Anfahrbetieb und mit beliebiger Regelungsart im Normalbetrieb, wird der Wechsel in den Normalbetrieb über einen Schalter realisiert, der bei Erreichen des Temperaturkriteriums den Regler für den Normalbetrieb aktiviert. Erst nachdem die Zirkulationspumpe angehalten wurde, wird in dieser Ausführungsvariante der Schalter zurückgesetzt, so dass beim erneuten Anfahren die Regelung für den Normalbetrieb zunächst wieder deaktiviert ist.

In einer bevorzugten Ausführungsvariante mit Temperaturbegrenzung im Anfahrbetrieb erfolgt zusätzlich zum Vergleich der Temperaturen oder der Reglerausgangssignale ein Umschalten in den Normalbetrieb mittels Schalter, sobald das Temperaturkriterium erreicht ist. Dadurch wechselt die Zirkulationspumpe nicht wieder in den Anfahrbetrieb, sobald das Temperaturkriterium einmal erfüllt war. Erst nachdem die Zirkulationspumpe angehalten wurde, wird in dieser Ausführungsvariante der Schalter zurückgesetzt, so dass beim erneuten Anfahren wieder der Anfahrbetrieb mit Temperaturbegrenzung erfolgt.

Erfolgt das Umschalten auf den geregelten Normalbetrieb, wenn der Sollwert dieses geregelten Normalbetriebs, nachfolgend konventioneller Sollwert genannt, den Grenzwert im Falle eines Heizungssystems überschreitet oder im Falle eines Kühlungssystems unterschreitet, wird der aktuelle Zustand des Heizungs- oder Kühlungssystems berücksichtigt. Mit anderen Worten wird ein für die im Normalbetrieb wirkende Regelung notwendiger Sollwert auch schon während der Anfahrphase der Zirkulationspumpe ermittelt. Dieser konventionelle Sollwert wird mit dem Grenzwert verglichen. Überschreitet der Sollwert den Grenzwert im Fall eines Heizungssystems, oder unterschreitet der Sollwert den Grenzwert im Falle eines Kühlungssystems, so wird dieser Sollwert für die Temperaturregelung verwendet, d.h. nicht mehr durch den Grenzwert begrenzt. Das zugrundeliegende Regelungsverfahren muss somit nicht geändert werden. Der Übergang von der Anfahrphase in den geregelten Normalbetrieb findet allein durch die Änderung des Sollwerts statt, der von der Medientemperatur abhängt.

Handelt es sich bei dem geregelten Normalbetrieb beispielswiese wie bei der Anfahrphase der Zirkulationspumpe um eine als Konstanttemperaturregelung implementierte Differenztemperaturregelung, so entspricht der konventionelle Sollwert für die erste Temperatur der um den gewünschten oder definierten Temperaturabstand reduzierten (Fall Heizungssystem) oder erhöhten (Fall Kühlungssystem) zweiten Temperatur.

Um den Grenzwert stets aus den aktuellsten Betriebswerten des Heizungs- oder Kühlungssystems ermitteln zu können, wird die Erfassung der Temperaturwerte und vorzugsweise auch deren Auswertung, zumindest während des geregelten Normalbetriebs durchgeführt. Sie kann auch bereits während der Anfahrphase erfolgen und dann im geregelten Normalbetrieb fortgesetzt werden.

Um sicherzustellen, dass die Anfahrphase tatsächlich verlassen wird, d.h. der Sollwert des geregelten Nomalbetriebs den Grenzwert im Fall eines Heizungssystems tatsächlich überschreitet oder im Falle eines Kühlungssystems tatsächlich unterschreitet, darf der Grenzwert im Heizfall nicht zu hoch, im Kühlfall nicht zu klein gewählt sein. Um dies zu erreichen, kann bei der Ermittlung des Grenzwerts aus den historischen Temperaturwerten zumindest ein Sicherheitsabstand berücksichtigt werden. Dieser ist so zu wählen, dass er gewährleistet, dass der Grenzwert mit Sicherheit im Fall eines Heizungssystems unter einem zu erwartenden Sollwert und im Fall eines Kühlungssystems über einem zu erwartenden Sollwert der Temperaturregelung liegt. Diese Berücksichtigung kann durch Addition einer Konstante zu den Temperaturwerten erfolgen, die im Fall eines Heizungssystems negativ oder im Fall eines Kühlungssystems positiv ist.

Derselbe Sicherheitsabstand kann bei der Auswertung sowohl auf die erste Temperatur als auch auf die zweite Temperatur addiert werden. Es können jedoch, bezogen auf die erste und zweite Temperatur, Sicherheitsabstände unterschiedlicher Beträge verwendet werden. Dies ermöglicht eine Anpassung des erfindungsgemäßen Verfahrens an die konkrete Anwendung.

Gemäß einer bevorzugten Ausführungsvariante kann der Grenzwert im Falle einer Differenztemperaturregelung aus zwei Hilfsgrößen ermittelt werden, die wiederum aus der ersten und zweiten Temperatur berechnet worden sind. Diese Hilfsgrößen können den genannten Sicherheitsabstand berücksichtigen.

Dabei kann beispielsweise durch Addition eines ersten Sicherheitsabstandes zur ersten Temperatur eine erste Hilfsgröße und/ oder durch Addition eines zweiten Sicherheitsabstandes zur zweiten Temperatur eine zweite Hilfsgröße bestimmt werden. Der Grenzwert wird dann aus der ersten und/ oder zweiten Hilfsgröße, vorzugsweise aus beiden Hilfsgrößen ermittelt.

Gemäß einer vorteilhaften Weiterbildung kann die zweite Hilfsgröße dem Sollwert der Temperaturregelung entsprechen, welcher jedoch den genannten Sicherheitsabstand bzw. zweiten Sicherheitsabstand berücksichtigt.

So kann die erste Hilfsgröße wie zuvor durch die Addition des ersten Sicherheitsabstandes zur ersten Temperatur gebildet werden. Die zweite Hilfsgröße kann jedoch durch die Addition des zweiten Sicherheitsabstandes und eines gewünschten Temperaturabstands der ersten Temperatur gegenüber der zweiten Temperatur zur zweiten Temperatur gebildet werden.

Die Ermittlung des Grenzwerts erfolgt vorzugsweise mittelbar aus den Temperaturwerten indem er anhand der Hilfsgrößen, d.h. aus von den Temperaturwerten abgeleiteten werden ermittelt wird.

Dabei kann im Fall eines Heizungssystems der jeweils kleinere oder im Fall eines Kühlungssystems der jeweils größere der Werte der Hilfsgrößen zu einem jeweiligen Zeitpunkt bestimmt und jeweils abgespeichert werden, wobei aus diesen abgespeicherten Werten der Grenzwert ermittelt wird. Es wird somit zu jedem Erfassungszeitpunkt nur eine der beiden Hilfsgrößen abgespeichert und weiterverwendet, d.h. eine Auswahl getroffen, welche der beiden Hilfsgrößen für die Bestimmung des Grenzwerts heranzuziehen ist. Die abgespeicherten Werte sind somit im Fall eines Heizungssystems nur Minimalwerte, im Falle eines Kühlungssystems nur Maximalwerte der Hilfsgrößen. Dies hat den Vorteil, dass kurzzeitig ungewöhnlich hohe Temperaturwerte gedämpft werden und sich nicht auf die Ermittlung des Grenzwerts auswirken.

Als Grenzwert kann nun im Falle eines Heizungssystems der größte abgespeicherte Wert bzw. der größte abgespeicherte Minimalwert, oder im Falle eines Kühlungssystems der kleinste abgespeicherte Wert bzw. kleinste abgespeicherte Maximalwert verwendet werden. Dies stellt sicher, dass der Sollwert für die Anfahrphase der Zirkulationspumpe im Heizfall ausreichend hoch ist und im Kühlfall ausreichend niedrig ist.

Die Speicherung der Temperaturwerte kann in einen Wertespeicher erfolgen, der vorteilhafterweise als Speicherstapel oder Ringspeicher ausgebildet ist. Ein solcher Speicher umfasst nur eine begrenzte Anzahl an Werte, wobei vollem Wertespeicher das Abspeichern eines neuen Werts den ältesten Wert im Speicher verdrängt. Ein solcher Speicher entspricht dem sogenannten FIFO-Prinzip (First-In-First-out) und implementiert besonders einfach den fortschreitenden, gleitenden Zeitraum.

Gemäß einer Ausführungsvariante kann der Grenzwert ermittelt werden, sobald die Zirkulationspumpe abgeschaltet wird. Mit Abschalten ist in diesem Sinne das Einstellen ihres Förderbetriebs gemeint. Der Grenzwert kann dann abgespeichert und bei der nächsten Anfahrphase der Zirkulationspumpe verwendet werden. Dies hat den Vorteil, dass der fortschreitende Zeitraum über das Abschalten der Zirkulationspumpe hinaus fortschreiten kann.

Alternativ kann vorgesehen sein, dass nach dem Abschalten der Zirkulationspumpe keine Werte mehr in den Wertespeicher geschrieben werden. Das Fortschreiten des Zeitraums wird somit angehalten bzw. die Speicherung der Werte unterbrochen, solange die Zirkulationspumpe gestoppt ist. Dies hat den Vorteil, dass der Grenzwert auch dann oder erst dann ermittelt werden kann, sobald die Zirkulationspumpe wieder eingeschaltet wird. Denn durch das Unterbrechen der Wertespeicherung werden die abgespeicherten Werte nicht durch diejenigen Werte überschrieben, die sich während des Auskühlens (Fall Heizungssystem) bzw. Aufwärmens (Fall Kühlungssystem) ergeben. Durch das Anhalten des fortschreitenden Zeitraums stehen zu Beginn der nächsten Anfahrphase der Zirkulationspumpe nur betriebsrelevante Werte zur Verfügung, d.h. solche Werte, die vor dem Abschalten der Zirkulationspumpe abgespeichert worden sind.

Gemäß einer weiteren Variante kann der Grenzwert fortlaufend zyklisch ermittelt werden und somit ein bereits ermittelter und verwendeter Grenzwert während der Anfahrphase der Zirkulationspumpe durch einen neuen Grenzwert ersetzt werden. Auch hierfür ist es sinnvoll, das Fortschreiten des Zeitraums der Temperaturerfassung anzuhalten, d.h. das Abspeichern von Werten zu unterbrechen, solange die Zirkulationspumpe gestoppt ist, damit der Grenzwert nur aus Werten des Betriebs des Systems ermittelt wird.

Gleichzeitig kann auch die Erfassung der Temperaturwerte gestoppt werden, solange die Zirkulationspumpe gestoppt ist, da während dieses Zeitraums nicht geregelt wird.

Die Erfassung der Temperaturwerte im Betrieb, und vorzugsweise auch deren Auswertung, kann beispielsweise zyklisch, insbesondere jede Minute erfolgen. Es sind aber auch andere Zykluszeiten möglich. Beispielsweise kann die Erfassung, und vorzugsweise auch die Auswertung, sekündlich, minütlich oder alle paar Minuten erfolgen.

Wie bereits ausgeführt, betrifft die Erfindung auch eine Zirkulationspumpe für ein Heizungs- oder Kühlungssystem zur Durchführung des erfindungsgemäßen Verfahrens. Sie umfasst eine Pumpenelektronik, die dazu eingerichtet ist, das erfindungsgemäße Verfahren auszuführen.

Insbesondere umfasst die Zirkulationspumpe einen elektrischen Antriebsmotor, zumindest ein von diesem angetriebenes Laufrad sowie eine Pumpenelektronik zur Steuerung und/ oder Regelung des Antriebsmotors, wobei die Pumpenelektronik eingerichtet ist, die Zirkulationspumpe nach ihrem Einschalten in einer Anfahrphase anders als in dem auf die Anfahrphase folgenden Normalbetrieb zu betreiben, wobei während der Anfahrphase zumindest eine Medientemperatur bestimmt wird und ein Umschalten von der Anfahrphase auf den Normalbetrieb dann erfolgt, wenn zumindest ein die Medientemperatur berücksichtigendes Temperaturkriterium erfüllt ist.

Weitere Merkmale, Vorteile und Eigenschaften des erfindungsgemäßen Verfahrens sowie der erfindungsgemäßen Zirkulationspumpe werden nachfolgend anhand von Ausführungsbeispielen anhand der beigefügten Figuren näher erläutert. Es zeigen:
- Fig. 1:: eine Heizungsanlage mit Wärmeübertrager und temperaturgeregelter Zirkulationspumpe mit zwei Temperatursensoren
- Fig. 2:: eine Heizungsanlage mit hydraulischer Weiche und temperaturgeregelter Zirkulationspumpe mit zwei Temperatursensoren
- Fig. 3a:: eine Heizungsanlage mit einem Verbraucher, beispielsweise einem Brauch- oder Trinkwassertank mit integriertem Wärmeübertrager und temperaturgeregelter Zirkulationspumpe mit zwei Temperatursensoren
- Fig. 3b:: eine Heizungsanlage mit einem Brauch- oder Trinkwassertank mit integriertem Wärmeübertrager und temperaturgeregelter Zirkulationspumpe mit vier Temperatursensoren
- Fig. 4:: eine Heizungsanlage mit Wärmeübertrager und temperaturgeregelter Zirkulationspumpe mit vier Temperatursensoren
- Fig. 5:: Blockschaltbild einer als Konstanttemperaturregelung modellierte Differenztemperaturregelung
- Fig. 6:: Blockschaltbild gemäß Fig. 5 mit erfindungsgemäßer Sollwertbegrenzung
- Fig. 7:: Ablaufdiagramm des erfindungsgemäßen Verfahren für eine Heizungsanlage
- Fig. 8:: Ablaufdiagramm des erfindungsgemäßen Verfahren für eine Kühlungsanlage
- Fig. 9, 9a-9e:: Simulationsdiagramme für eine Temperaturregelung an einem Wärmeübertrager mit erfindungsgemäße Sollwertlimitierung
- Fig. 10:: Simulationsdiagramme für eine Temperaturregelung bei einer Speicherbeladung mit erfindungsgemäßer Sollwertlimitierung
- Fig. 11:: Blockschaltbild einer als Konstanttemperaturregelung modellierte Doppel-Differenztemperaturregelung
- Fig. 12:: Blockschaltbild gemäß Fig. 11 mit erfindungsgemäßer Sollwertbegrenzung
- Fig. 13:: Blockschaltbild einer Regelungsstruktur mit zwei Reglern für eine als Konstanttemperaturregelung modellierte Differenztemperaturregelung mit erfindungsgemäßer Sollwertbegrenzung
- Fig. 14:: Blockschaltbild einer Regelungsstruktur mit zwei Reglern für eine Differenztemperaturregelung mit erfindungsgemäßer Sollwertbegrenzung
- Fig. 15:: Blockschaltbild einer Regelungsstruktur mit zwei Reglern für eine beliebige von einer Medientemperatur abhängigen Prozessgrößenregelung mit erfindungsgemäßer Sollwertbegrenzung
- Fig. 16:: eine Umschalteinrichtung für die Führungsgröße eines Reglers
- Fig. 17:: eine Umschalteinrichtung für die Ausgangssignale zweier Regler
- Fig. 18:: eine Heizungsanlage mit einem Fußbodenheizungsverteiler mit dezentralen Zirkulationspumpen im Rücklauf
- Fig. 19:: Blockschaltbild einer Differenztemperaturregelung nach dem Stand der Technik
- Fig. 20:: Blockschaltbild einer Doppel-Differenztemperaturregelung nach dem Stand der Technik

Fig. 1 zeigt eine erste Ausführungsvariante einer Heizungsanlage nach dem Stand der Technik, bei der eine Temperaturregelung mit dem erfindungsgemäßen Verfahren Anwendung findet. Die Heizungsanlage umfasst einen Erzeugerkreis 3 und einen Verbraucherkreis 4, die miteinander über eine thermische Kopplung in Gestalt eines Wärmeübertragers 5a, beispielsweise ein Plattenwärmetauscher oder Genstromwärmetauscher, thermisch gekoppelt sind. im Erzeugerkreis 3 ist zumindest eine Heizquelle 6, z.B. ein Brenner, sowie eine Zirkulationspumpe 1 angeordnet, die ein Wärmeträgermedium im Erregerkreis über die Vorlaufleitung 8 und die Rücklaufleitung 9 umwälzt. Alternativ können auch zwei oder mehr Heizquellen 6 vorhanden sein. In dieser Ausführungsvariante ist die Zirkulationspumpe 1 in der Vorlaufleitung 8 des Erzeugerkreises 3 angeordnet und fördert das Wärmeträgermedium von der Heizquelle zum Wärmeübertrager 5a, welcher die Wärme des Wärmeträgermediums an den Verbraucherkreis 4 abgibt. Aus Sicht des Wärmeübertragers 5a ist der Erzeugerkreis 3 somit der Primärkreis und der Verbraucherkreis 4 ist der Sekundärkreis der Heizungsanlage.

Im Verbraucherkreis 4 liegt ein Verbraucher 7, wobei auch zwei oder mehr Verbraucher 7 vorhanden sein können. Dem Verbraucher 7 ist ein selbstregelndes Stellglied, z.B. ein Thermostatventil 7a vorgeschaltet. Ein Wärmeträgermedium im Verbraucherkreis 4, welches nicht notwendigerweise identisch sein muss zum Medium im Erzeugerkreis 3, jedoch identisch sein kann, wird von einer weiteren Zirkulationspumpe 2 vom Wärmeübertrager 5a über eine Vorlaufleitung 12 zum Verbraucher 7 und über die Rücklaufleitung 13 vom Verbraucher 7 zurück zum Wärmeübertrager 5a gefördert. Dabei ist die zweite Zirkulationspumpe 2 in der Vorlaufleitung angeordnet. Sind zwei oder mehr Verbraucher 7 vorhanden, so kann die Zirkulationspumpe 2 Medium durch alle Verbraucher fördern. Es können aber auch mehrere Zirkulationspumpen 2 parallel angeordnet sein, die vom selben Wärmeübertrager 5a über jeweils eine eigene Vorlaufleitung 12 zum jeweiligen Verbraucher 7 und über jeweils eigene Rücklaufleitung 13 vom jeweiligen Verbraucher 7 zurück zum Wärmetauscher fördern.

Die erste Zirkulationspumpe 1 umfasst einen elektrischen Antriebsmotor, beispielsweise einen elektronisch kommutierten Synchronmotor, vorzugsweise in Nassläuferbauweise, zumindest ein Laufrad, das von dem Motor angetrieben ist, wobei das Laufrad auf am Ende einer Rotorwelle des Elektromotors sitzen kann, sowie eine Pumpenelektronik zur Steuerung und/ oder Regelung des Antriebsmotors.

Die erste Zirkulationspumpe 1 ist in ihrer Drehzahl temperaturgeregelt. Die Drehzahl, die im Rahmen der Regelung die Stellgröße ist, wird derart eingestellt, dass sich ein bestimmter Temperaturunterschied ΔTₛₒₗₗ = ΔT_{SP1} am Wärmeübertrager 5a zwischen einer ersten Temperatur T₁ und einer zweiten Temperatur T₂ einstellt. Die erste Temperatur ist die geregelte Temperatur und entspricht hier der Temperatur T₁ im Vorlauf 12 des Verbraucherkreises 4, die von einem ersten Temperatursensor 10 gemessen wird. Die zweite Temperatur entspricht der Temperatur T₂ im Vorlauf 8 des Erzeugerkreises 4, die von einem zweiten Temperatursensor 14 gemessen wird. Die zweite Temperatur T₂ kann witterungsgeführt sein. Dies bedeutet, dass das Heizungssystem die Vorlauftemperatur im Erzeugerkreis 3 in Abhängigkeit der Außentemperatur einstellt. Die Außentemperatur ist dabei die Temperatur außerhalb des Gebäudes, indem das Heizungssystem verbaut ist. Die Temperaturregelung für die erste Temperatur ist in der Pumpenelektronik 1 der Zirkulationspumpe 1 implementiert, weshalb die Temperatursensoren 10, 14 ihre Messwerte über Messleitungen 11, 15 an die Zirkulationspumpe 1 bzw. an deren Pumpenelektronik liefern.

Bei der Temperaturdifferenzregelung wird die Führungsgröße anhand eines neben der Regelgröße zweiten Temperatursignals bestimmt und hängt somit direkt von diesem Istwert ab. In bestimmten Anwendungen kann es vorkommen, dass diese Führungsgröße durch die direkte Abhängigkeit des zweiten Temperatursignals unerwünschte Werte annimmt. Die Folgen sind dann beispielsweise ein ungewolltes Systemverhalten oder ein ineffizienter Betrieb des zu regelnden Systems.

Erfindungsgemäß ist die Temperaturdifferenzregelung als eine Konstanttemperaturregelung modelliert, wie sie in Fig. 5 in Form eines Blockschaltbildes dargestellt ist. Diese Art der Temperaturregelug stellt den geregelten Normalbetrieb dar, der bestimmungsgemäß bei der Zirkulationspumpe in dieser Anwendung eingestellt ist, obgleich die Zirkulationspumpe 1 zur Verwendung in anderen Anwendungen auch andere Betriebsmodi beherrschen kann.

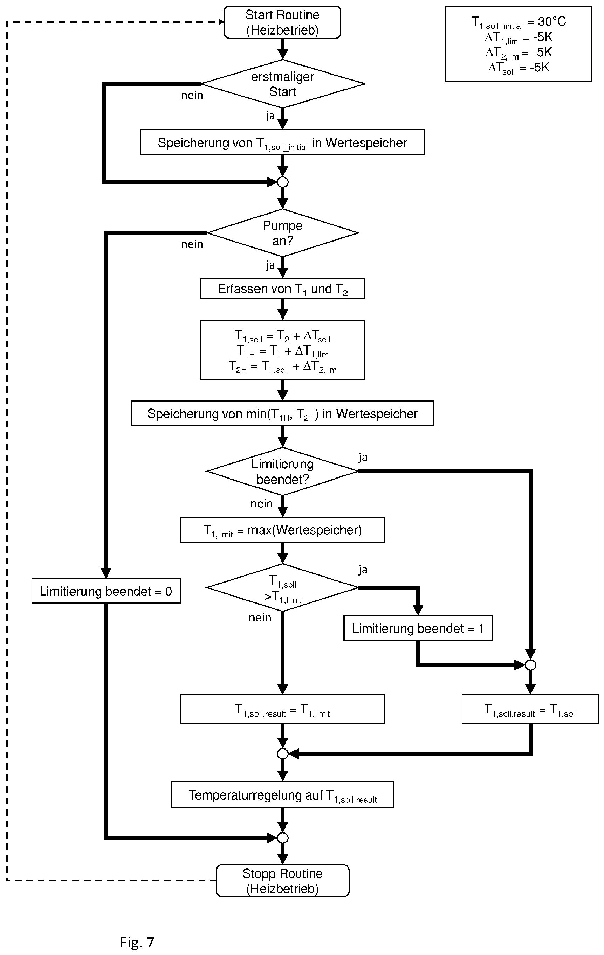

Wie Fig. 5 zeigt, wird im Normalbetrieb die Drehzahl n der Zirkulationspumpe 1 so geregelt, dass die erste Temperatur T₁ gleich der um einen gewünschten Temperaturunterschied ΔTₛₒₗₗ reduzierten zweiten Temperatur T₂ ist, wobei der Temperaturunterschied ΔTₛₒₗₗ sinnvollerweise der Temperaturspreizung ΔT_{SP1} am Wärmeübertrager 5a im Auslegungsfall entspricht. Im Blockdiagramm gemäß Fig. 7 ist der Temperaturunterschied ΔT_{SP1} als negative Konstante -5K festgelegt. Er kann zwischen -3K und -10K liegen. Diese Temperaturspreizung ΔT_{SP1} ist sowohl durch die Bauform und Qualität des Wärmeübertragers 5a wie auch durch die herrschenden Volumenströme und Eintrittstemperaturen beeinflusst. Weicht zum Beispiel der Volumenstrom im Sekundärkreis vom Auslegungsfall ab, so ergibt sich (ohne Anpassung des Volumenstroms im Primärkreis) eine abweichende Temperaturspreizung ΔT_{SP1}.

Ziel dieser Temperaturdifferenzregelung ist es, identische Volumenströme oder Massenströme im Erzeuger- und Verbraucherkreis 3, 4 zu erhalten, wodurch ein energetisch optimaler Betrieb der Zirkulationspumpe 1 und einer Zubringerpumpe 2 des Heizungssystems erreicht wird.

Zur Regelung der ersten Temperatur T₁ wird ein Sollwert T_{1,soll} aus dem Temperaturunterschied ΔT_{SP1} und der zweiten Temperatur T₂ berechnet, so dass die Solltemperatur T_{1,soll} um den Temperaturunterschied ΔT_{SP1} kleiner ist als die zweite Temperatur T₂. Da sich die zweite Temperatur T₂ in Abhängigkeit des Betriebs der Heizungsanlage ändert, ist der Sollwert T_{1,soll} variabel, d.h. von der zweiten Temperatur T₂ abhängig. Aufgrund dieser Abhängigkeit stellt die Konstanttemperaturregelung eine Differenztemperaturregelung dar.

Wie bei einer Regelung üblich, ist die Regelgröße in Gestalt der ersten Temperatur T₁ negativ auf den Eingang des Reglers rückgekoppelt, so dass ihr Istwert vom Sollwert subtrahiert wird. Der Fehler e wird einem Regler zugeführt, der in bekannter Weise als PI- oder PID-Regler ausgeführt sein kann. Alternativ zur Drehzahl kann auch ein Differenzdruck, ein Volumenstrom oder eine Leistung der Zirkulationspumpe 1 als Stellgröße vorgegeben werden, wobei dann ein unterlagerter Differenzdruckregler, Volumenstromregler oder Leistungsregler wirken kann und den Stellwert einregelt. Die Regelstrecke in Fig. 5 entspricht der Pumpeneinheit der Zirkulationspumpe 1 samt den mit dieser verbundenen Leitungen und Ventile des Heizungssystems einschließlich des Verbraucherkreises 4, infolge derer sich die erste Temperatur T₁ einstellt.

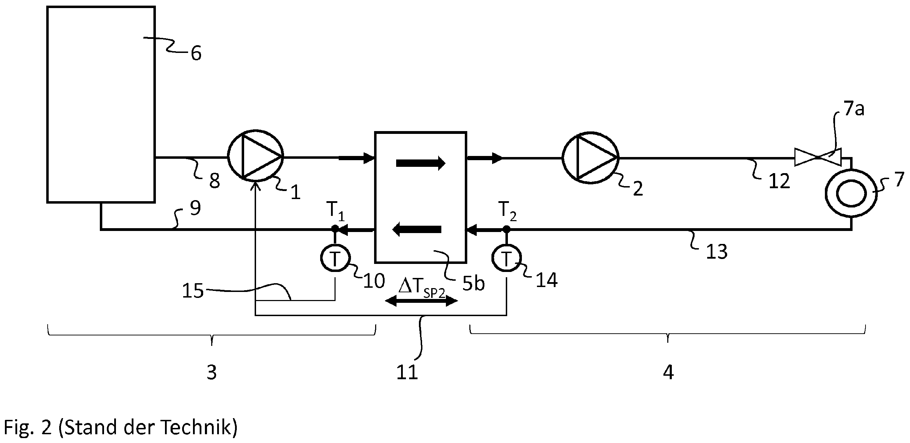

Fig. 2 zeigt eine alternative Heizungsanlage, die sich von der Ausführungsvariante in Fig. 1 lediglich darin unterscheidet, dass die thermische Kopplung über eine hydraulische Weiche 5b erfolgt. Während der Wärmeübertrager 5a gemäß Fig. 1 eine Medientrennung zwischen Erzeugerkreis 3 und Verbraucherkreis 4 aufweist und somit verschiedene Medien in den Kreisen 3, 4 verwendet werden können, mischen sich die Medien von Erzeugerkreis 3 und Verbraucherkreis 4 in einer hydraulischen Weiche 5b, so dass nur ein Wärmeträgermedium vorliegt.

Ferner unterscheidet sich die Variante in Fig. 2 von der Variante in Fig. 1 darin, dass die Temperaturregelung aufgrund der Temperaturen in den Rückläufen 9, 13 erfolgt. Auch können die beiden Zirkulationspumpen 1, 2 in den Rückläufen liegen. Die Temperaturregelung ist hier ebenfalls im Wesentlichen gleich und entspricht der Struktur in Fig. 5, obgleich die beiden Temperatursensoren 10, 14 ihren Messort getauscht haben. Die zu regelnde erste Temperatur T₁ ist hier die primärseitige Rücklauftemperatur, wobei die zweite Temperatur T₂ die sekundärseitige Rücklauftemperatur ist.

Bei einer idealisierten Betrachtung einer hydraulischen Weiche gibt es folgende Zustände in der hydraulischen Weiche:
- Ist der Volumenstrom im Sekundärkreis höher als der Volumenstrom im Primärkreis, so tritt eine Mischung nur am Austritt des Sekundärvorlaufs auf. Im Falle eines Heizungssystems ist die Sekundärvorlauftemperatur um ΔT_{SP2} niedriger als die Primärvorlauftemperatur. Die Rücklauftemperaturen sind gleich.
- Ist der Volumenstrom im Primärkreis höher als der Volumenstrom im Sekundärkreis, so tritt eine Mischung nur am Austritt des Primärrücklaufs auf. Im Falle eines Heizungssystems ist die Primärrücklauftemperatur um ΔT_{SP} höher als die Primärvorlauftemperatur. Die Vorlauftemperaturen sind gleich.
- Sind die Volumenströme gleich, so tritt keine Mischung auf. Sowohl die Vorlauftemperaturen wie auch die Rücklauftemperaturen sind gleich.

In der Praxis finden in der hydraulischen Weiche Verwirbelungen oder Kreisströmungen statt. Die Austrittstemperatur am Sekundvorlauf liegt um ΔT_{SP2} niedriger als die Eintrittstemperatur am Primärvorlauf. Die Austrittstemperatur am Primärrücklauf liegt um ΔT_{SP2} höher als die Eintrittstemperatur am Sekundärrücklauf.

Aus Gründen der Anlageneffizienz strebt man in der Regel an, dass im Vorlauf möglichst kein Temperaturabfall in Richtung Verbraucher auftritt. Im Rücklauf wird ein geringer Temperaturanstieg in Richtung Erzeuger toleriert. Dazu muss die Temperaturdifferenz ΔTₛₒₗₗ geringfügig über ΔT_{SP2} bei liegen. Sie muss abgeschätzt werden, und beträgt beispielsweise zwischen -2,5K und -5K, vorzugsweise -3K.

Fig. 3a zeigt eine dritte Heizungsanlage mit einem Pumpenkreis 3' und einem Verbraucher 7. Der Verbraucher 7 kann ein integrierter Wärmetauscher eines Brauchwasser- oder Trinkwasserspeicher sein, der unter Verwendung des integrierten Wärmetauschers 7 erwärmt wird. Alternativ kann es sich bei dem Verbraucher zum Beispiel um einen Verbraucherkreis mit ventilgesteuerten Heizkörpern handeln, die im parallelen Zweirohrsystem, im Tichelmannsystem oder im Einrohrsystem angebunden sind.

Es ist effizient, den Massenstrom im Pumpenkreis 3' durch die Zirkulationspumpe 1 so einzuregeln, dass sich zwischen Eintritt und Austritt am internen Wärmetauscher eine bestimmte Temperaturdifferenz ΔTₛₒₗₗ = ΔT_{SPS3} einstellt. War die Zirkulationspumpe im Primärkreis 3' für einige Zeit ausgeschaltet, so haben sich die Temperaturen am Wärmetauschereintritt und -austritt im Primärkreis 3' angeglichen und die zu regelnde Temperaturdifferenz ΔT_{SP3} geht gegen null. Wird nun die Zirkulationspumpe 1 eingeschaltet um den Wärmespeicher 16 zu erwärmen, liegt die Führungsgröße bzw. der Sollwert unterhalb des Istwerts und das Pumpenaggregat startet mit einer niedrigen Leistung. Dieses Verhalten führt dazu, dass der Speicher 16 unerwünscht langsam erwärmt wird. Die Leistung der Zirkulationspumpe 1 steigt erst, sobald die Führungsgröße ansteigt, die direkt von der Temperatur T₂ am Wärmetauschereintritt im Primärkreis 3' abhängt. Durch die niedrige Leistung der Zirkulationspumpe 1 zu Beginn wird auch ein Anstieg der Führungsgröße bzw. des Sollwerts verlangsamt, welches das unerwünscht langsame Erwärmen des Speichers zusätzlich begünstigt. Wird die Führungsgröße zu Beginn der Erwärmung auf einen sinnvollen Wert limitiert, führt das zu einer hohen Leistung der Zirkulationspumpe 1 und der Wärmespeicher 16 wird zügig erwärmt. Auch ein rascher Anstieg der Temperatur am Wärmetauschereintritt im Primärkreis 3' wird durch dieses Verhalten gefördert. Ist dieser Anlaufvorgang abgeschlossen, kann die Limitierung deaktiviert werden und die Temperaturdifferenzregelung führt zu einem effizienten Erwärmen des Speichers. Auch aus Sicht des Komforts ist eine schnelle Erwärmung des Wärmspeichers sinnvoll.

Die zu regelnde erste Temperatur T₁ entspricht in diesem Beispiel in Fig. 3a der Temperatur im Rücklauf 9', d.h. am Wärmetauscheraustritt, während die zweite Temperatur der Temperatur im Vorlauf 8', d.h. am Wärmetauschereintritt entspricht. Die Heizquelle 6 ist hier über die Vorlaufleitung 8' und die Rücklaufleitung 9' direkt mit dem Wärmetauscher 7 verbunden, d.h. ohne eine thermische Kopplung, so dass nur ein Pumpenkreis 3' vorliegt, in dem die Zirkulationspumpe 1 das Wärmeträgermedium fördert. Im Übrigen ist diese Ausführungsvariante identisch zur Variante in Fig. 1. Ziel der Temperaturregelung ist es, die bestimmte Temperaturdifferenz ΔTₛₒₗₗ = ΔT_{SP3} zwischen Ein- und Austritt am Wärmetauscher 16 einzustellen. Auch hier kann die Regelung zunächst identisch zu der Struktur in Fig. 5a sein.

Fig. 4 zeigt eine Heizungsanlage mit thermischer Kopplung 5 zweier Kreise 3, 4 entsprechend Fig. 1, die ein Wärmetauscher 5a oder eine hydraulische Weiche 5b sein kann, wobei hier jedoch vier Temperatursensoren 10, 14, 17, 18 zur Regelung der ersten Zirkulationspumpe 1 verwendet werden. Ein erster Temperatursensor 10 zur Messung der ersten Temperatur T₁ ist im Vorlauf des Verbraucherkreises 4, ein zweiter Temperatursensor 14 zur Messung der zweiten Temperatur T₂ ist im Vorlauf des Erzeugerkreises 3, ein dritter Temperatursensor 17 zur Messung einer dritten Temperatur T₃ ist im Rücklauf des Erzeugerkreises 3 und ein vierter Temperatursensor 18 zur Messung einer vierten Temperatur T₄ ist im Rücklauf des Verbraucherkreises 4 angeordnet. Eine erste Messleitung 15 verläuft vom ersten Temperatursensor 10 der ersten Zirkulationspumpe 1, eine zweite Messleitung 11 vom zweiten Temperatursensor 14 zur ersten Zirkulationspumpe 1, eine dritte Messleitung 19 vom dritten Temperatursensor 17 zur ersten Zirkulationspumpe 1 und eine vierte Messleitung 20 vom vierten Temperatursensor 18 zur ersten Zirkulationspumpe 1. Das Ziel der Temperaturregelung besteht hier wie in Fig. 1 darin, identische Volumen- oder Massenströme im Erzeuger- und Verbraucherkreis 3, 4 zu erreichen. Dies kann durch das Regelungsziel erreicht werden, dass der Temperaturunterschied ΔT₁₂ = T₁ - T₂ im Vorlauf identisch ist zum Temperaturunterschied ΔT₃₄ = T₃ - T₄ im Rücklauf. Alternativ kann das Regelungsziel verwendet werden, dass der Temperaturunterschied ΔT₁₄ = T₁-T₄ auf der Sekundärseite 4 identisch ist zum Temperaturunterschied ΔT₂₃ = T₂-T₃.

Eine vorteilhafte Regelungsstruktur für eine Anwendung mit vier Temperatursensoren zeigt Fig. 11. Diese Doppel-Differenztemperaturregelung ist hier zu einer Konstanttemperaturregelung für die erste Temperatur T₁ umgeformt, so dass der Sollwert für die erste Temperatur T₁ nicht nur abhängig von der zweiten Temperatur T₂, sondern auch von der dritten und vierten Temperatur T₃, T₄ ist.

Gemäß der in Fig. 11 dargestellten Regelungsstruktur wird die dritte Temperatur T₃ zunächst von der zweiten Temperatur T₂ abgezogen, so dass man die primärseitige Temperaturdifferenz ΔT₂₃ = T₂-T₃ erhält. Zu dieser wird dann die vierte Temperatur T₄ hinzuaddiert. Die so gebildete Summe ΔT₂₃ + T₄ bildet den Sollwert T_{1,soll} für die erste Temperatur T₁.

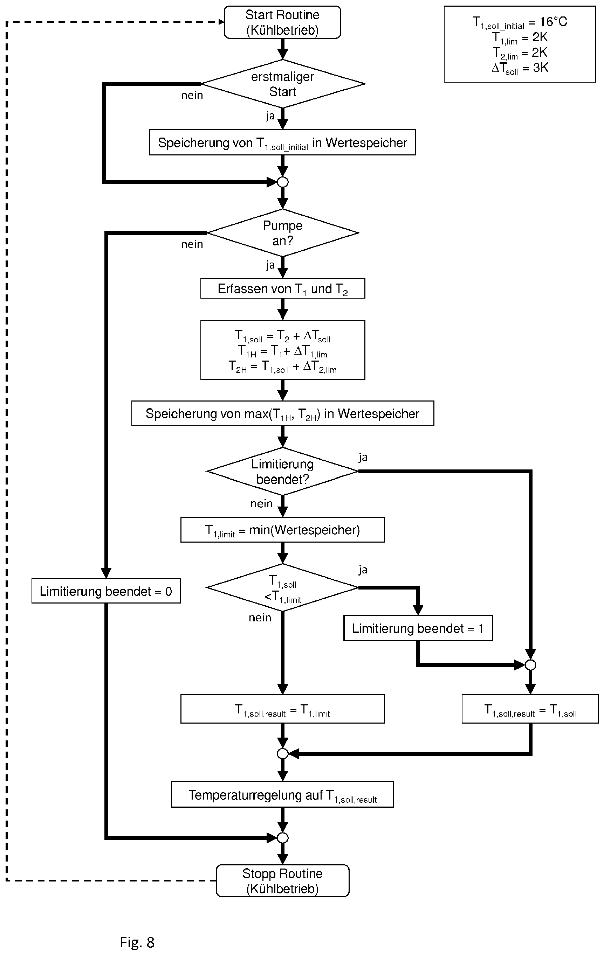

Bei allen dargestellten Anwendungsfällen ist die Pumpenelektronik der ersten Zirkulationspumpe 1 eingerichtet, eine Temperaturregelung der Zirkulationspumpe 1 nach deren Einschalten in Abhängigkeit der zweiten Temperatur durchzuführen, und aus historischen Temperaturwerten einen Grenzwert zu ermitteln, der als Sollwert für die Temperaturregelung in der Anfahrphase der Zirkulationspumpe eingestellt wird. Somit wird in der Anfahrphase nicht der von der zweiten Temperatur abhängige Sollwert, sondern der ermittelte Grenzwert als Sollwert verwendet. Dies wird nachfolgend anhand der Ablaufdiagramme in den Fig. 7 und 8 beschrieben.

Das o.g. Problem des ungewollten Systemverhalten oder ineffizienten Betriebs des zu regelnden Systems wird dadurch gelöst, dass anhand einer Berechnungsvorschrift eine Limitierung für die Führungsgröße berechnet wird. Diese Limitierung kann bis zu zwei Grenzen beinhalten, die als obere bzw. untere Beschränkung für die Führungsgröße verwendet werden können. Die Berechnung der Limitierung berücksichtigt dabei historische, aufgezeichnete Temperatursignalverläufe, um eine optimale Limitierung bestimmen zu können. Die Länge des Zeitraums, in dem die Temperatursignalverläufe aufgezeichnet werden, ist variabel und kann je nach Anwendung variieren. Zudem kann die Limitierung automatisch anhand der Temperatursignalverläufe aktiviert und deaktiviert werden. Diese Aktivierung und Deaktivierung erfolgt automatisch gemäß einer hinterlegten Umschaltlogik mittels einer Umschalteinrichtung U.

Der Vorteil des erfindungsgemäßen Verfahrens besteht darin, dass durch die Limitierung unerwünschte Bereiche der Führungsgröße vermieden werden können. Dabei ist die Berechnung der Limitierung adaptiv und passt sich an die vorliegenden Temperaturniveaus des zu regelnden Systems an, indem historische Temperatursignalverläufe berücksichtigt werden. Eine Verwendung der Limitierung führt dazu, dass beispielsweise dem zu regelnden System ein bestimmtes erwünschtes Verhalten aufgezwungen wird, welches sich ohne Limitierung nicht einstellen würde. Auch ein effizienter Betrieb des Systems lässt sich mit Hilfe der Limitierung erreichen.

Die Erfindung umfasst eine Temperaturdifferenzregelung, die um eine dynamische Anpassung einer Führungsgrößenlimitierung erweitert ist, welche sich anhand aufgezeichneter Temperatursignalverläufe dynamisch optimal an das zu regelnde System anpasst. Diese Limitierung wird dabei je nach Vorteilhaftigkeit aktiviert bzw. deaktiviert.

Zur Ausführung des Verfahrens umfasst die Pumpenelektronik zumindest einen Mikroprozessor, der den Verfahrensablauf steuert und die verfahrensgemäßen Berechnungen ausführt, und zumindest einen Wertespeicher, insbesondere einen Ringspeicher, der die erfassten Temperaturwerte oder daraus berechnete Werte speichert. Ferner kann ein zweiter Speicher in der Pumpenelektronik vorhanden sein, in dem die zur Ausführung des Verfahrens auf dem Mikroprozessor notwendigen Befehle gespeichert sind, die das Verfahren ausführen, wenn es auf dem Mikrocontroller abgearbeitet werden.

Fig. 7 zeigt ein Ablaufdiagramm einer Ausführungsvariante des erfindungsgemäßen Verfahrens für einen Heizbetrieb in Form eines zyklisch abzuarbeitenden Verfahren, das als Software-Routine implementiert sein kann. Es beginnt mit "Start Routine" und endet mit "Stopp Routine". "Stopp Routine" bedeutet nicht, dass das Verfahren beendet ist, sondern dass die Routine bis zum nächsten Aufruf pausiert. Das Verfahren verwendet als Parameter die einzuhaltende Temperaturdifferenz ΔTₛₒₗₗ zwischen der ersten und zweiten Temperatur T₁, T₂, ein erster und zweiter Sicherheitsabstand ΔT_{1,lim}, ΔT_{2,lim} sowie ein initialer Sollwert T_{1,soll,initial}. Der initiale Sollwert T_{1,soll,initial} ist auf 30°C vordefiniert. Der erste und zweite Sicherheitsabstand ΔT_{1,lim}, ΔT_{2,lim} sind beide auf -5K vordefiniert, und auch die Temperaturdifferenz ΔTₛₒₗₗ ist auf -5K vordefiniert. Obgleich diese Parameter zu Beginn des Verfahrens vorgegeben sind, kann vorgesehen sein, dass sie individuell angepasst, insbesondere manuell geändert werden können.

Das Verfahren beginnt bei "Start Routine (Heizbetrieb)". Sofern es sich um einen erstmaligen Start bzw. ein erstmaliges Anfahren der Zirkulationspumpe handelt, der regelmäßig bei der Inbetriebnahme der Zirkulationspumpe 1 bzw. des Heizungssystems vorliegt, wird zunächst der initiale Sollwert T_{1,soll,initial} in einen Wertespeicher in Gestalt eines Speicherstapels oder Ringspeichers geschrieben. Der initiale Sollwert T_{1,soll,initial} ist der Startwert für den erfindungsgemäßen Grenzwert. Er wird jedoch nur zu Anfang des ersten Anfahrens der Zirkulationspumpe verwendet. Nach Anschalten der Pumpe wird schon bei der ersten Ausführung der Routine ein Element des Speicherstapels oder Ringspeichers durch einen neuen Wert ersetzt. Der initiale Sollwert kann ein Schätzwert oder ein in Kenntnis der Struktur und Auslegung des Heizungssystems berechneter Wert sein. Durch den initialen Sollwert T_{1,soll,initial} wird der Wertespeicher mit einem ersten Wert gefüllt.

Handelt es sich nicht um eine Inbetriebnahme, d.h. nicht um einen erstmaligen Start der Zirkulationspumpe (Nein-Zweig), so befinden sich zwangsläufig bereits Werte im Wertespeicher und dieser muss nicht mit einem Wert gefüllt werden. In dem Verfahren folgt dann eine Prüfung, ob die Zirkulationspumpe 1 eingeschaltet ist, d.h. pumpt. An dieser Stelle sei angemerkt, dass ein Ausschalten der Zirkulationspumpe nicht bedeuten muss, dass die Zirkulationspumpe stromlos ist. Vielmehr bedeutet ein Ausschalten im Sinne der Erfindung, dass der Motor der Pumpe angehalten ist. Es ist irrelevant, ob die Pumpenelektronik in dieser Zeit weiterhin mit Spannung versorgt wird. Das Ausschalten kann durch Abschalten der Spannungsversorgung oder durch ein Signal erfolgen.

Ist die Pumpe ausgeschaltet (Nein-Zweig), so wird weder die Regelung noch die Auswertung der Medientemperaturen ausgeführt. Damit beim nächsten Anfahren der Anfahrbetrieb startet, wird in diesem Zweig ein Parameter "Limitierung beendet" mit dem Booleschen Wert 0 belegt wird. Wird das Ausschalten durch Abschalten der Spannungsversorgung realisiert, so wird der Parameter vor dem Wiederanlaufen der Pumpe auf den Wert 0 gesetzt. Die Software-Routine geht sodann bis zum nächsten zyklischen Aufruf in Pause (Stopp Routine(Heizbetrieb)). Die im Ringspeicher enthaltenen Werte werden beibehalten.

Nach einem Wartezyklus, der beispielsweise zwischen 30 Sekunden und 5 Minute betragen kann, wird die Software-Routine erneut gestartet (Start Routine (Heizbetrieb)). Vorzugsweise erfolgt dies jede Minute.

Ist die Zirkulationspumpe 1 eingeschaltet, werden zunächst die erste und die zweite Temperatur T₁, T₂ erfasst. Dies erfolgt vorzugsweise durch Messen mittels der Temperatursensoren 10 und 14 gemäß den Ausführungsbeispielen in Fig. 1 bis 3a. Dabei kann derjenige Temperatursensor 10 oder 14 der im Primärkreis liegt in der Zirkulationspumpe 1 integriert sein.

Anschließend wird aus der zweiten Temperatur T₂ und der Temperaturdifferenz ΔTₛₒₗₗ ein Sollwert T_{1,soll} gemäß T_{1,soll} = T₂ + ΔTₛₒₗₗ berechnet, der dem konventionellen Sollwert für die im geregelten Normalbetrieb wirkende Temperaturregelung entspricht. Eben dieser Sollwert wird durch den erfindungsgemäßen Grenzwert begrenzt. Er wird erst dann relevant, wenn von der Temperaturregelung in der Anfahrphase auf den geregelten Normalbetrieb übergegangen wird.

Neben dem Sollwert T_{1,soll} wird aus den beiden Temperaturen T₁, T₂ und den beiden Sicherheitsabständen ΔT_{1,lim} jeweils eine Hilfsgröße T_{1H}, T_{2H} gemäß T_{1H} = T₁ + ΔT_{1,lim} und T_{2H} = T_{1,soll} + ΔT_{2,lim} berechnet. Dabei ergibt sich die erste Hilfsgröße T_{1H} durch Addition des negativen ersten Sicherheitsabstands ΔT_{1,lim} zur ersten Temperatur T₁, also faktisch durch eine Subtraktion. Ferner ergibt sich die zweite Hilfsgröße T_{2H} durch Addition des negativen zweiten Sicherheitsabstands ΔT_{2,lim} zum Sollwert T_{1,soll}, also ebenfalls faktisch durch eine Subtraktion. Da sich der Sollwert T_{1,soll} aus der Addition der negativen Temperaturdifferenz ΔTₛₒₗₗ zur zweiten Temperatur ergibt, wird folglich die zweite Hilfsgröße T_{2H} durch die Addition des negativen zweiten Sicherheitsabstands ΔT_{2,lim} und der negativen Temperaturdifferenz ΔTₛₒₗₗ zur zweiten Temperatur T₂ berechnet. Faktisch, im vorliegenden Heizfall, also durch Subtraktionen

Von den beiden Hilfsgrößen T_{1H}, T_{2H} wird der kleinere Wert in den Wertespeicher geschrieben.

Es erfolgt anschließend eine Abfrage, wie der Boolesche Parameter "Limitierung beendet" bei der Ausführung des Verfahrens im vorherigen Zyklus gesetzt worden ist ("Limitierung beendet?"). War die Zirkulationspumpe 1, wie zuvor erläutert, im vorherige Zyklus ausgeschaltet, wurde der Boolesche Parameter "Limitierung beendet" auf logisch 0 gesetzt, was einem "Nein" entspricht. In diesem Fall, würde die Abfrage der Bedingung, ob die Sollwertbegrenzung beendet ist, ebenfalls verneint werden und das Verfahren wird in Richtung "Nein-Zweig" fortgesetzt.

Ist die Limitierung noch nicht beendet, so wird anschließend der größte Wert des Wertespeichers ermittelt, der den erfindungsgemäßen Grenzwert T_{1,limit} bildet. Im Falle der erstmaligen Inbetriebnahme sind zu Beginn des Verfahrens abgesehen vom initialen Sollwert T_{1,soll_initial} und dem ersten Wert einer der beiden Hilfsgrößen noch keine Werte im Wertespeicher. Da das Heizungssystem das Wärmeträgermedium gerade erwärmt, wird der erste abgespeicherte Wert einer der Hilfsgrößen deutlich unterhalb des initialen Sollwert T_{1,soll_initial} liegen, also noch keinen sinnvollen Wert liefern. Somit ergibt sich zu Beginn eines Heizvorgangs der initiale Sollwert T_{1,soll_initial} als Grenzwert T_{1,limit}.

Im vorliegenden Heizfall soll der Grenzwert T_{1,limit} eine untere Grenze des Sollwerts T_{1,soll} sein. Somit soll keine Begrenzung stattfinden, bzw. muss keine Begrenzung mehr stattfinden, wenn der Sollwert T_{1,soll} über den Grenzwert T_{1,limit} steigt. Dies ist das Temperaturkriterium, dessen Eintritt den Übergang zum geregelten Normalbetrieb definiert und das nun im Verfahren abgefragt wird, siehe Block "T_{1,soll} >T_{1,limit} ?". Dieser Block bildet eine Umschalteinrichtung U, wie sie in den Figuren 6, 12, 13-15 sowie 17 dargestellt ist.

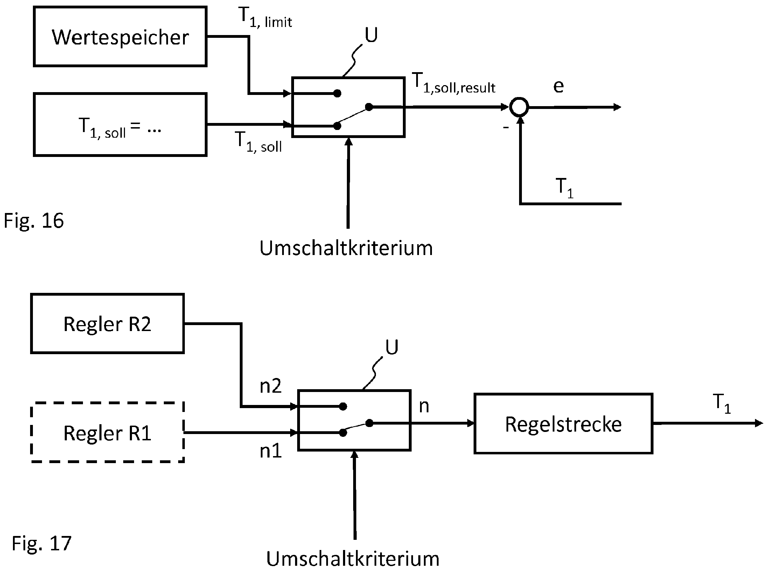

Es wird nun angenommen, dass dieses Temperaturkriterium nicht erfüllt ist, da es in der Anfahrphase der Zirkulationspumpe 1 bzw. zu Beginn eines Heiz- oder Kühlbetriebs nicht sofort erfüllt sein kann. Das Verfahren wird somit im Nein-Zweig der Kriteriumsabfrage fortgesetzt und der ermittelte Grenzwert T_{1,limit} als endgültiger Sollwert T_{1,soll}, ᵣₑₛᵤₗₜ für die Temperaturregelung übernommen, T_{1,soll}, ᵣₑₛᵤₗₜ = T_{1,limit}. Dieses explizite Umschalten entspricht dem in Fig 16 dargestellten Schalter. In einem alternativen Verfahren wird auf den Booleschen Parameter "Limitierung beendet" und die zugehörige Verzweigung verzichtet. In dieser Variante wird der endgültige Sollwert durch Minimalwertbildung aus Grenzwert und konventionellem Sollwert erzeugt (T_{1,soll}, ᵣₑₛᵤₗₜ = min(T_{1,limit}, T_{1,soll})). Hierdurch erfolgt die Umschaltung zwischen Normalbetrieb und Anfahrbetrieb implizit. Diese Form der Umschaltung ist in den Blockschaltbildern Fig. 6 und 12 dargestellt. Die Software-Routine wird nun beendet, "Stopp Routine (Heizbetrieb)", und im nächsten Zyklus erneut aufgerufen. Die Sollwertbegrenzung dauert an, da der Parameter "Limitierung beendet" weiterhin den Wert 0 hat.

Im nächsten Zyklus werden erneut die beiden Temperaturen T₁, T₂ erfasst und daraus der konventionelle Sollwert T_{1,soll} sowie die Hilfsgrößen T_{1H}, T_{2H} berechnet. Anschließend wird wieder der kleinere Wert der Hilfsgrößen T_{1H}, T_{2H} in den Wertespeicher geschrieben und aus dem Wertespeicher der größte Wert ermittelt, welcher als Grenzwert T_{1,limit} verwendet wird.

Ist der Sollwert T_{1,soll} noch immer kleiner als der Grenzwert T_{1,limit}, wird erneut der Grenzwert T_{1,limit} als endgültiger Sollwert T_{1,soll}, ᵣₑₛᵤₗₜ gesetzt und darauf geregelt.

Diese Schritte werden in jedem Zyklus wiederholt, solange die Pumpe 1 eingeschaltet bleibt und der Sollwert T_{1,soll} nicht über den Grenzwert T_{1,limit} ansteigt. Ist letzteres der Fall, ist die Anfahrphase beendet. Somit kann die Begrenzung beendet werden, z.B. indem der Boolesche Parameter "Limitierung beendet" auf logisch 1 gesetzt wird, was einem "Ja" entspricht. Der Sollwert T_{1,soll} wird in diesem Fall als endgültiger Sollwert T_{1,soll}, ᵣₑₛᵤₗₜ für die Temperaturregelung übernommen, T_{1,soll}, ᵣₑₛᵤₗₜ = T_{1,soll}, welche nun den geregelten Normalbetrieb bildet. Es wird somit anschließend auf diesen endgültigen Sollwert T_{1,soll}, ᵣₑₛᵤₗₜ temperaturgeregelt. Die Software-Routine wird nun wieder beendet "Stopp (Heizbetrieb)" und im nächsten Zyklus fortgesetzt.

Im nächsten Zyklus, während welchem noch immer auf den konventionelle Sollwert T_{1,soll} geregelt wird, werden nun erneut die beiden Temperaturen T₁, T₂ erfasst und daraus ein neuer konventioneller Sollwert T_{1,soll} sowie neue Hilfsgrößenwerte T_{1H}, T_{2H} berechnet. Anschließend wird wieder der kleinere Wert der Hilfsgrößen T_{1H}, T_{2H} in den Wertespeicher geschrieben und aus dem Wertespeicher der größte Wert ermittelt, welcher als Grenzwert T_{1,limit} verwendet wird. Diese Schritte werden somit auch dann ausgeführt, wenn die erfindungsgemäße Sollwertbegrenzung nicht wirkt. Dies hat den Vorteil, dass bei in der nächsten Anfahrphase der Zirkulationspumpe 1 keine veralteten Werte im Wertespeicher liegen, sondern Werte aus den letzten Betriebsminuten der Zirkulationspumpe 1.

Wird die Zirkulationspumpe 1 ausgeschaltet, was ein externes Ereignis zu dem hier beschrieben Verfahren darstellt, wird dies bei einem nächsten Zyklus bei der Abfrage "Pumpe an?" festgestellt. In diesem Fall erfolgt keine Erfassung und Auswertung der Temperaturwerte T₁, T₂ mehr. Die Speicherung wird unterbrochen, solange die Zirkulationspumpe 1 gestoppt ist. Somit wird der Wertespeicher nicht weiter gefüllt. Er behält vielmehr die Werte aus den letzten Betriebsminuten der Zirkulationspumpe 1. Das Heizungssystem wird nun auskühlen, und es ist der nächste Start der Zirkulationspumpe zu erwarten, nach welchem erneut eine Sollwertbegrenzung erforderlich werden könnte. Dies ist jedenfalls dann erforderlich, wenn das Heizungssystem soweit abgekühlt ist, dass der konventionelle Sollwert unter den aus den historischen Temperaturwerten ermittelten Grenzwert liegt. Aus diesem Grund wird im Nein-Zweig der Abfrage "Pumpe an?" (die Pumpe ist dann folglich ausgeschaltet) der Boolesche Parameter "Limitierung beendet" auf logisch 0, d.h. auf "Nein" gesetzt. Dies stellt quasi ein "Reset" dar und öffnet in dem auf den Neustart der Zirkulationspumpe 1 folgenden Zyklus den Pfad zur Ermittlung des Grenzwerts T_{1,limit}. Somit ist die Sollwertbegrenzung beim nächsten Pumpenstart wieder aktiv.

Wird die Zirkulationspumpe 1 wieder eingeschaltet, was ebenfalls ein externes Ereignis zu dem hier beschrieben Verfahren darstellt, wird dies bei einem nächsten Zyklus bei der Abfrage "Pumpe an?" festgestellt. Es werden nun wieder die beiden Temperaturen T₁, T₂ erfasst und daraus der konventionelle Sollwert T_{1,soll} sowie die Hilfsgrößen T_{1H}, T_{2H} berechnet. Anschließend wird wieder der kleinere Wert der Hilfsgrößen T_{1H}, T_{2H} in den Wertespeicher geschrieben.

Das Maximum der Werte im Wertespeichers, d.h. der Grenzwert T_{1,limit} wird dann wieder als endgültiger Sollwert eingestellt, sofern nicht der konventionelle Sollwert höher ist.

Diese beschriebene Software-Routine wird nun im Betrieb der Zirkulationspumpe 1 in einer Heizungsanlage immer wieder zyklisch wiederholt. Der Grenzwert für die Sollwertlimitierung wird folglich in der Anfahrphase der Zirkulationspumpe zu jedem Zeitschritt neu aus dem Wertespeicher bestimmt. Die Soll-Temperaturdifferenz ΔTₛₒₗₗ kann sich auf eine der Temperaturspreizungen ΔT_{SP1}, ΔT_{SP2}, ΔT_{SP3} in den Figuren 1, 2 oder 3a beziehen.

Fig. 8 zeigt den Ablauf des Verfahrens im Falle eines Kühlungssystems. Es unterscheidet sich vom Verfahren in Fig. 7 lediglich darin, dass die Initialisierungswerte für die Soll-Temperaturdifferenz ΔTₛₒₗₗ und die Sicherheitsabstände ΔT_{1,lim}, ΔT_{2,lim} positiv und betraglich anders gewählt sind, der größere Wert der beiden Hilfsgrößen T_{1,lim}, T_{2,lim} in den Wertespeicher geschrieben wird, aus dem Wertespeicher das Minimum anstelle des Maximums als Grenzwert T_{1,limit} verwendet wird und das Kriterium für die Beendung der Limitierung "T_{1,soll} < T_{1,limit}" anstelle von "T_{1,soll} > T_{1,limit}" lautet. Im Übrigen sind die Verfahrensschritte gleich bzw. sinngemäß analog zu den Verfahrensschritten im Heizbetrieb.

Als initialer Sollwert T_{1,soll_initial} ist eine Temperatur von 16°C definiert. Die Temperaturdifferenz ΔTₛₒₗₗ ist mit +3K, die Sicherheitsabstände T_{1,lim}, T_{2,lim} sind jeweils mit +2K vordefiniert. Obgleich diese Parameter zu Beginn des Verfahrens vorgegeben sind, kann vorgesehen sein, dass sie individuell angepasst, insbesondere manuell geändert werden können.

Im Ergebnis kann das Verfahren durch die folgenden wesentlichen Schritte in chronologischer Reihenfolge charakterisiert werden:
a) Einschalten der Zirkulationspumpe 1,
b) Erfassen der ersten und zweiten Temperatur T₁, T₂
c) Berechnung der ersten Hilfsgröße T_{1H}, die, im Falle eines Heizungssystems, durch Addition des negativen ersten Sicherheitsabstandes T_{1,lim} zur ersten Temperatur T₁, oder, im Falle eines Kühlungssystems, durch die Addition des positiven ersten Sicherheitsabstandes T_{1,lim} zur ersten Temperatur T₁ gebildet wird,
d) Berechnung des konventionellen Sollwerts T_{1,soll_norm}, der im Falle eines Heizungssystems, durch Addition des negativen Temperaturabstands ΔT_{SP} zur zweiten Temperatur T₂, oder, im Falle eines Kühlungssystems, durch Addition des positiven Temperaturabstands ΔT_{SP} zu der zweiten Temperatur T₂ gebildet ist,
e) Berechnung der zweiten Hilfsgröße T_{2H}, die, im Falle eines Heizungssystems, durch Addition des negativen zweiten Sicherheitsabstandes T_{2,lim} zum konventionellen Sollwert T_{1,soll}, oder, im Falle eines Kühlungssystems, durch Addition des positiven zweiten Sicherheitsabstandes (T_{2,lim}) zu dem konventionellen Sollwert T_{1,soll} gebildet ist.
f) Vergleich der ersten und zweiten Hilfsgröße T_{1H}, T_{2H} miteinander und Speicherung des aktuellen Werts derjenigen Hilfsgröße T_{1H}, T_{2H} in dem Wertespeicher, die, im Falle eines Heizungssystems, kleiner, oder, im Falle eines Kühlungssystems, größer ist,
g) Wiederholung der Schritte b) bis h),
h) Abschalten der Zirkulationspumpe (1),
i) Erneutes Einschalten der Zirkulationspumpe (1) zu einem späteren Zeitpunkt
j) Bestimmung des, im Falle eines Heizungssystems größten, oder im Falle eines Kühlungssystems kleinsten Wertes im Wertespeicher, wobei dieser Wert den Grenzwert T_{1,limit} bildet und
k) Verwendung dieses Grenzwerts T_{1,limit} als endgültiger Sollwert T_{1,soll,result} zur Einregelung der ersten Temperatur T₁, solange dieser Grenzwert, im Fall eines Heizungssystems kleiner, oder im Fall eines Kühlsystems größer als der konventionelle Sollwert T_{1,soll} ist.

Fig. 6 veranschaulicht die Erweiterung der konventionellen, als Konstanttemperatur modellierten Differenztemperaturregelung durch die erfindungsgemäße Sollwertbegrenzung. Im Vergleich zu Fig. 6 ist der Wertespeicher hinzugekommen, in welchem im Heizfall die Minimalwerte, im Kühlfall die Maximalwerte der beiden Hilfsgrößen T_{1H}, T_{2H} stehen. Aus dem Wertespeicher wird der Grenzwert T_{1,limit} ermittelt, der im Heizfall dem Maximum, im Kühlfall dem Minimum der Werte im Wertespeichers entspricht. Der Grenzwert T_{1,limit} wird anschließend mit dem ermittelten Sollwert T_{1,soll} verglichen. Im Heizfall gilt: solange der konventionelle Sollwert T_{1,soll} kleiner als der Grenzwert T_{1,limit} ist, wird der Grenzwert T_{1,limit}, anderenfalls der konventionelle Sollwert T_{1,soll} als endgültiger Sollwert T_{1,soll,result} verwendet. Mit anderen Worten wird stets das Maximum der beiden Werte T_{1,limit}, T_{1,soll} als endgültiger Sollwert T_{1,soll,result} verwendet. Im Kühlfall gilt: solange der konventionelle Sollwert T_{1,soll} größer als der Grenzwert T_{1,limit} ist, wird der Grenzwert T_{1,limit}, anderenfalls der konventionelle Sollwert T_{1,soll} als endgültiger Sollwert T_{1,soll,result} verwendet. Mit anderen Worten wird stets das Minimum der beiden Werte T_{1,limit}, T_{1,soll} als endgültiger Sollwert T_{1,soll,result} verwendet.

Analog zu Fig. 6 veranschaulicht Fig. 12 die Erweiterung der konventionellen, als Konstanttemperatur modellierten Doppel-Differenztemperaturregelung durch die erfindungsgemäße Sollwertbegrenzung. Die Ausführungen zu Fig. 6 gelten hier gleichermaßen.

Die Umschaltung vom Anfahrbetrieb in den Normalbetrieb erfolgt nach diesen Blockschaltbildern implizit dadurch, dass aus Grenzwert und konventionellem Sollwert der größere (Heizbetrieb) bzw. kleinere (Kühlbetrieb) gewählt wird. Es kann aber auch explizit erfolgen indem bei Erfüllung des Temperaturkriteriums ein Schalter den Signalpfad vom Grenzwert auf den konventionellen Sollwert umlenkt, wie in Fig. 16 gezeigt. Das Temperaturkriterium kann wiederum als Überschreiten bzw. Unterschreiten des Grenzwerts durch den konventionellen Sollwert definiert sein. Es kann aber auch ein anderes Temperaturkriterium verwendet werden.

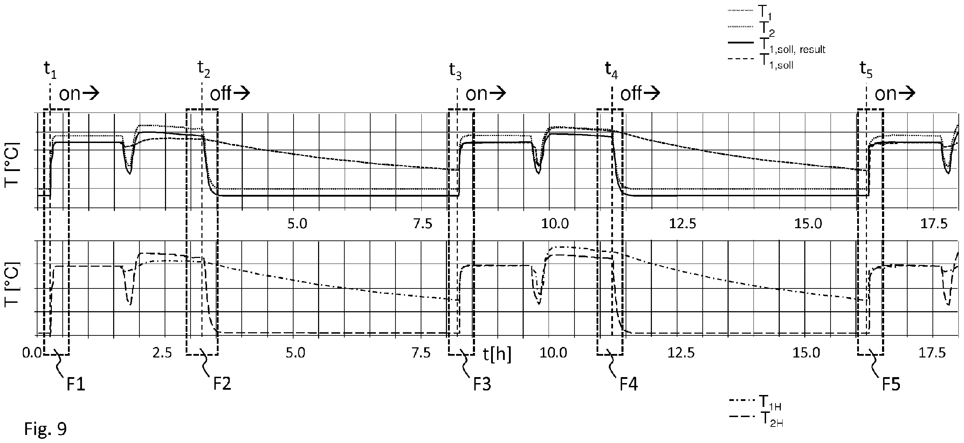

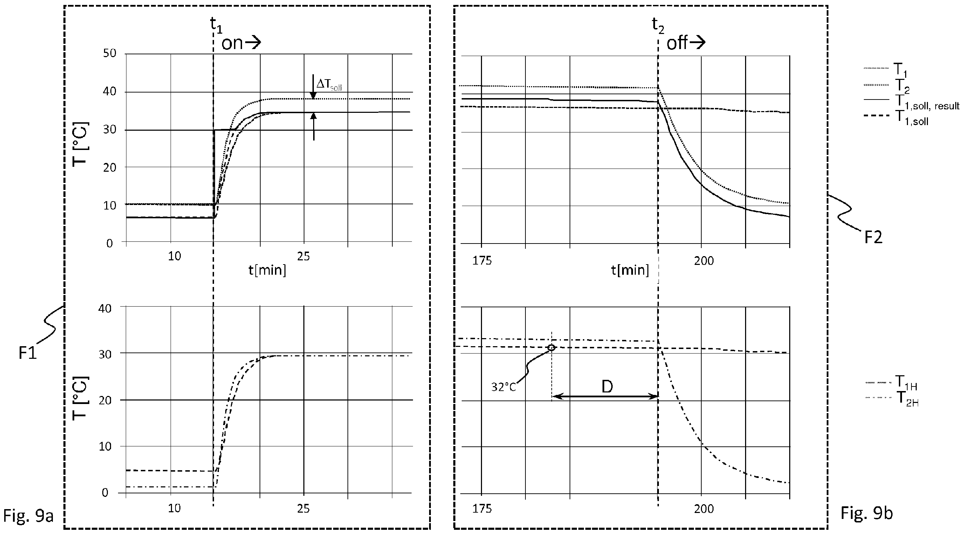

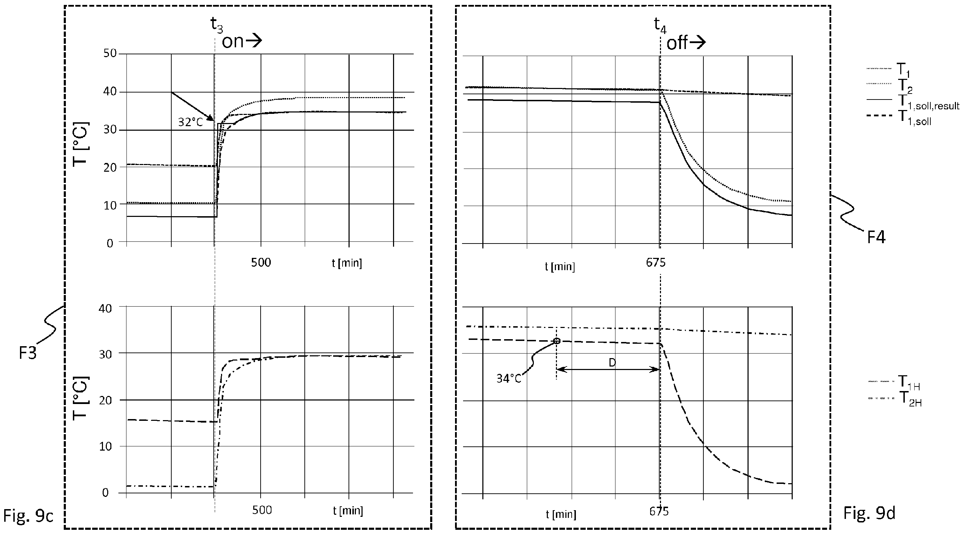

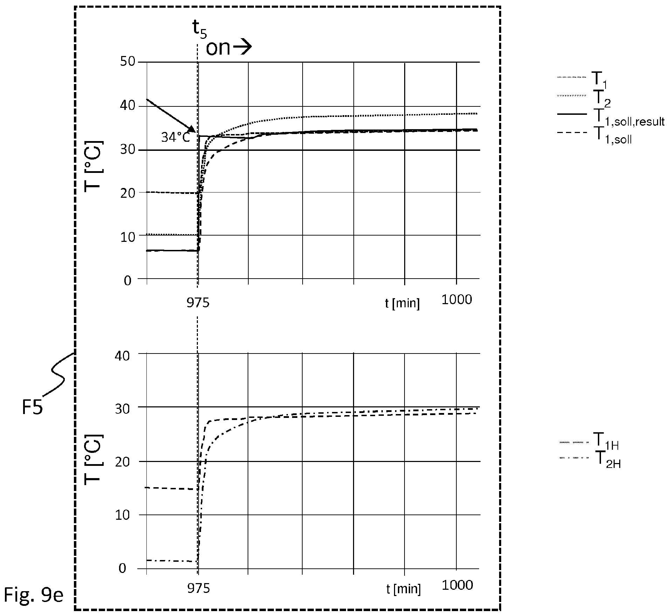

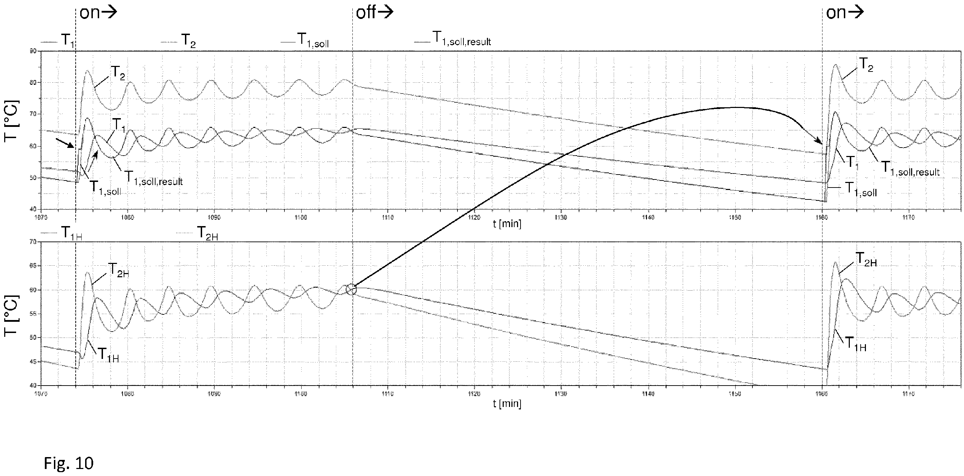

Die technische Wirkung des erfindungsgemäßen Verfahrens wird nachfolgend anhand von Simulationsergebnissen bei einer Heizungsanlage beschrieben. Dabei betrifft Fig. 9 eine Heizungsanlage mit Wärmeübertrager, Fig. 10 eine Heizungsanlage mit Brauchwasserspeicher.

Fig. 9 zeigt im oberen Diagramm den Verlauf der ersten Temperatur T₁ (eng gestrichelte Linie ), der zweiten Temperatur T2 (gepunktete Linie), des konventionellen Sollwerts T_{1,soll} (weit gestrichelte Linie) und des endgültigen Sollwerts T_{1,soll,result} (durchgezogene Linie) für einen Heizfall. Das untere Diagramm zeigt den Verlauf der ersten Hilfsgröße T_{1H} (weit gestrichelte Linie ) und der zweiten Hilfsgröße T_{2H} (strich gepunktete Linie). In dem dargestellten Zeitraum von 18 Stunden sind verschiedene Ereignisse simuliert. Dabei wird die Zirkulationspumpe 1 zum Zeitpunkt t₁ eingeschaltet, so dass sie das Wärmeträgermedium fördert. Zum Zeitpunkt t2 wird sie wieder ausgeschaltet, zum Zeitpunkt t₃ wieder eingeschaltet, bei t₄ wieder aus und bei t₅ wieder eingeschaltet.

Um den Verlauf der sechs Größen besser erkennen zu können, ist um die Zeitpunkte t₁ bis t₅ herum jeweils ein Fenster F1 bis F5 gesetzt, deren Zeitabschnitt in den Fig. 9a bis 9e vergrößert dargestellt sind. Fenster F1 ist in Fig. 9a, Fenster F2 in Fig. 9b, Fenster F3 in Fig. 9c, Fenster F4 in Fig, 9d und Fenster F5 in Fig. 9e vergrößert dargestellt. Diese Vergrößerungen haben eine Minuteneinteilung auf der Zeitachse.

Wie in Fig. 9a erkennbar ist, erfolgt bei der durchgezogenen Linie T_{1,soll,result} unmittelbar nach dem Einschalten der Zirkulationspumpe bei t₁=10min ein Sprung auf 30°C. Dies ist die Wirkung des initialen Sollwerts T_{1,soll,initial}, der hier als Grenzwert T_{1,limit} fungiert, da zu Beginn des Verfahrens bzw. bei der Inbetriebnahme der Pumpe 1 noch keine betriebsspezifischen Werte der Heizungsanlage im Wertespeicher sind. Dieser initiale Sollwert T_{1,soll,initial} ist von der Anwendung Heizen/ Kühlen abhängig. Im Kühlfall beträgt er beispielsweise 16°C.

Die betriebsspezifischen Werte der Heizungsanlage werden nun erst gesammelt, indem das Verfahren gemäß Fig. 7 jede Minute ausgeführt wird. Der initiale Sollwert T_{1,soll,initial} wird als Sollwert für die Temperaturregelung verwendet und von dieser eingeregelt, solange er kleiner als der konventionelle Sollwert T_{1,soll} ist. Dies ist in der Simulation für etwa 2 Minuten der Fall. Der konventionelle Sollwert T_{1,soll} übersteigt dann nach t₁ + 2min den Grenzwert T_{1,limit}, so dass der konventionelle Sollwert T_{1,soll} nun unlimitiert als endgültiger Sollwert T_{1,soll,result} verwendet wird. In Fig. 9a ist dies daran erkennbar, dass die durchgezogene Linie T_{1,soll,result} nach t₁ + 2 min auf die weit gestrichelte Linie T_{1,soll} abknickt und ab diesem Zeitpunkt deckungsgleich mit dieser Linie verläuft. Die Temperaturregelung regelt somit ab t₁ + 2 min die erste Temperatur T₁ auf den konventionellen Sollwert T_{1,soll} ein.

Etwa 8 Minuten nach t₁ ist der konventionelle Sollwert T_{1,soll} eingeregelt, so dass der Verlauf der ersten Temperatur T1 (enggestrichelte Linie) mit dem Verlauf des konventionellen Sollwert T_{1,soll} übereinstimmt. Ab diesem Zeitpunkt ist die erste Temperatur T₁ um die Soll-Temperaturdifferenz ΔT_{SP} kleiner als die zweite Temperatur T₂, wobei die Temperaturdifferenz ΔT_{SP} bei den Simulationsergebnissen -3,5K beträgt.

Fig. 9b veranschaulicht die Temperatur- und Sollwerte um den ersten Ausschaltzeitpunt t₂ herum. Die zweite Temperatur T₂ sinkt vor t₂ stetig und annährend linear, weshalb auch die erste Temperatur T₁ abnimmt. Allerdings verläuft die erste Temperatur T₁ hier wenige Grad unter dem Sollwert T_{1,soll,result}. Die Regelung kann die Temperatur nicht weiter erhöhen und damit dichter an den Sollwert bringen, da die Pumpe bereits auf Maximaldrehzahl läuft.

Der Ausschaltzeitpunkt t₂ liegt bei ca. 195 min. Nach diesem Zeitpunkt t₂ sinkt die zweite Temperatur T₂ schnell ab, wobei die erste Temperatur T₁ nur viel langsamer fällt. In der Simulation ist die Rohrdämmung stark unterschiedlich gewählt, um Testbedingungen für den Anfahrbetreib in kurzer Zeit zu erreichen. In der Praxis wird das Absinken der Temperaturen dichter beieinander liegen.

Vor dem ersten Ausschaltzeitpunkt t₂ wurde bei jedem Zyklus der jeweils kleinere Wert der beiden Hilfsgrößen T_{1H}, T_{2H} abgespeichert, d.h. in den Wertespeicher geschrieben. Die Abgespeicherten Werte entsprechen somit quasi der unteren Hüllkurve aus T_{1H}, T_{2H}. Da der Wertespeicher als Speicherstapel oder Ringspeicher ausgebildet ist, verdrängt der jeweils aktuell zu speichernde Wert den ersten Wert im Wertespeicher, so dass man einen fortschreitenden, gleitenden Zeitraum D erhält, für welchen die Werte im Wertespeicher stehen. Im vorliegenden Fall umfasst dieser Zeitraum rein beispielhaft 12 Minuten, da sich die Vorlauftemperatur T₂ relativ schnell ändern kann. Es können jedoch beliebige andere Zeiträume gewählt werden. Da der Verfahrensablauf gemäß Fig. 7, oder im Kühlfall gemäß Fig.8, im Minutentakt wiederholt wird, umfasst der Wertespeicher somit 12 Werte. Der Verfahrensablauf kann jedoch auch sekündlich ausgeführt werden, so dass der Wertespeicher in 12 Minuten 720 Werte umfasst. Er kann jedoch auch eine beliebige andere Größe haben, womit dann entsprechend auch die Länge des Erfassungszeitraums D festgelegt ist.

Die Speicherung der Werte wird mit dem Abschalten der Pumpe 1 beendet, so dass der Wertespeicher nicht mehr fortgeschrieben wird. Somit werden die informativen Werte aus der letzten Betriebsphase, insbesondere die letzten 12 Minuten dieser letzten Betriebsphase, nicht durch die irrelevanten Werte aus der Auskühlphase überschrieben. In der diagrammatischen Darstellung bedeutet dies, dass der Zeitraum D nicht weiterwandert.

Von den gespeicherten Werten wird nun der größte Wert ermittelt und als Grenzwert T_{1,limit} für die nächste Anfahrphase der Zirkulationspumpe 1 verwendet. Es wird somit kein absolutes Maximum der unteren Hüllkurve von T_{H1} und T_{H2} verwendet, sondern nur ein lokales Maximum, welches dem Maximum im Zeitraum D entspricht. In Fig. 9b ist dieser größte Wert eingekreist. Er beträgt etwa 32°C und stammt von der ersten Hilfsgröße T_{1H} . Da die Temperatur T₁ stetig gefallen ist, ist es der älteste Wert im Zeitraum D.

Die nächste Anfahrphase beginnt bei t₃ = 495min. Der Grenzwert T_{1,limit} wird nun als endgültiger Sollwert T_{1,soll,result} verwendet, so dass die entsprechende Kurve (durchgezogene Linie) in Fig. 9c einen steilen Sprung erkennen lässt, der durch einen Pfeil gekennzeichnet ist. Die Temperaturregelung regelt somit ab t₃ die erste Temperatur T₁ auf den Grenzwert T_{1,limit} ein. Der Grenzwert T_{1,limit} bleibt solange als endgültiger Sollwert T_{1,soll,result} gültig, bis ihn der konventionelle Sollwert T_{1,soll} überschreitet. Dies ist etwa 2 min nach t₃ der Fall, wenn die durchgezogene Linie für T_{1,soll,result} die weit-gestrichelte Linie für T_{1,soll} trifft. Zu diesem Zeitpunkt wird die erfindungsgemäße Sollwertbegrenzung abgeschaltet. Es wird der konventionelle Sollwert T_{1,soll} als endgültiger Sollwert T_{1,soll,result} gesetzt und die Temperaturregelung regelt wieder auf diesen konventionelle Sollwert T_{1,soll}. Die Kurve für T_{1,soll,result} folgt dann der Kurve für T_{1,soll}.

Fig. 9d veranschaulicht die Temperatur- und Sollwerte um den zweiten Ausschaltzeitpunt t₄ herum. Die zweite Temperatur T₂ sinkt vor dem Zeitpunkt t₄ wieder stetig und annährend linear ab, weshalb auch die erste Temperatur T₁ abnimmt. Allerdings entspricht die erste Temperatur T₁ hier ebenfalls nicht dem Sollwert T_{1,soll,result}, sondern liegt deutlich höher und nahezu gleichauf mit der zweiten Temperatur. Die Regelung kann die Temperatur nicht weiter absenken und damit dichter an den Sollwert bringen, da die Pumpe bereits auf Minimaldrehzahl läuft.

Der zweite Ausschaltzeitpunkt t₄ liegt bei ca. 675 min. Von der ersten und zweiten Hilfsgröße T_{1H}, T_{2H} ist dieses Mal die zweite Hilfsgröße T_{2H} kleiner, und wurde bei den letzten 12 Zyklen in den Wertespeicher geschrieben, der ab dem zweiten Ausschaltzeitpunkt t4 nicht mehr weiter mit Werten befüllt wird. Da die zweite Temperatur T₂ stetig gefallen ist, ist der älteste Wert im Zeitraum D, d.h. der erste Wert des Wertespeichers, der größte Wert und wird als Grenzwert T_{1,limit} verwendet. Er ist wieder eingekreist und beträgt etwa 34°C.

Die nächste, dritte Anfahrphase beginnt bei t₅ = 957min. Der Grenzwert T_{1,limit} wird nun wieder als endgültiger Sollwert T_{1,soll,result} verwendet, so dass die entsprechende Kurve (durchgezogene Linie) in Fig. 9e einen Sprung erkennen lässt, der durch einen Pfeil gekennzeichnet ist. Der Grenzwert T_{1,limit} bleibt solange als endgültiger Sollwert T_{1,soll,result} gültig, bis ihn der konventionelle Sollwert T_{1,soll} überschreitet. Dies ist etwa 5min nach t₅ der Fall. Ab diesem Zeitpunkt wird wieder der konventionelle Sollwert T_{1,soll} als endgültiger Sollwert T_{1,soll,result} gesetzt und auf diesen geregelt. Die Kurve für T_{1,soll,result} folgt dann wieder der Kurve für T_{1,soll}.

Es sei noch angemerkt, dass sich die in Fig. 9 zu den Zeitpunkten t = 1,75h und t = 9,75h stattfindenden Temperatureinbrüche in der zweiten Temperatur T₂, denen auch die Sollwerte T_{1,soll,result} und T_{1,soll} folgen, aufgrund des gleitenden Zeitfensters D nicht auf den erfindungsgemäßen Grenzwert T_{1,limit} auswirken. Mit diesen Temperatureinbrüchen wird gezeigt, dass die Limitierung des Sollwertes nicht mehr aktiv ist.

Fig. 10 zeigt in zwei Diagrammen analog zu Fig 9 die Verläufe der Temperaturen und Sollwerte am Beispiel der Speicherladeregelung in einem Heizungssystem gemäß Fig. 3a. Der Zeitraum D umfasst hier 2 Stunden, da bei einer Speicherladung davon ausgegangen werden kann, dass bei jeder Beladung dieselbe Vorlauftemperatur kommt. Abweichungen hiervon sind durch Störgrößen bedingt z.B. durch Versorgung unterschiedlich heißer Kreise aus dem gleichen Wärmeerzeuger unmittelbar bevor die Speicherladung gestartet wird. Alternativ kann der Zeitraum zwischen 30min und 3h liegen.

Die Zeitachse umfasst eine Einteilung in Minuten, wobei der Abstand zwischen zwei Einteilungsstrichen zwei Minuten entspricht. Die Zirkulationspumpe 1 wird zum Zeitpunkt t=1074min eingeschaltet. Der initiale Sollwert beträgt hier 58°C. Der linke Pfeil in Fig. 10 weist auf den Sollwertsprung. Das erfindungsgemäße Verfahren wird jede Sekunde ausgeführt. Nach etwa 25 Sekunden übersteigt der konventionelle Sollwert bereits den initialen Sollwert, so dass die Sollwertbegrenzung nicht mehr aktiv ist und fortan auf den konventionellen Sollwert geregelt wird. Da die Sollwertbegrenzung nicht mehr aktiv ist, kann der konventionelle Sollwert auch kleiner als initiale Sollwert bzw. der Grenzwert werden. Auf diese Situation weist der rechte Pfeil bei ca. t = 1077min hin. Hier sinkt der konventionelle Sollwert unter 58°C.

Während die Zirkulationspumpe 1 eingeschaltet ist, wird entsprechend dem wiederholt ausgeführten Verfahrensablauf in Fig. 7 die erste und zweite Temperatur erfasst, daraus der erste und zweite Hilfswert berechnet und der jeweils kleinere der beiden Hilfswerte in den Wertespeicher geschrieben. Somit beschreiben die Werte im Wertespeicher die untere Hüllkurve der beiden Kurven T_{1H} und T_{2H}. Zum Zeitpunkt t = 1106min wird die Pumpe ausgeschaltet und die Abspeicherung der Werte unterbrochen. Der größte Wert der unteren Hüllkurve liegt kurz vor dem Ausschalten vor, nämlich dort, wo sich die erste und die zweite Hilfsgröße schneiden. Dieser Punkt ist durch einen Kreis gekennzeichnet. Dier Wert liegt bei etwa 60°C. Er bildet beim nächsten Einschalten der Pumpe 1 zum Zeitpunkt t = 1160 min den Sollwert.

Eine alternative Regelungsstruktur zu derjenigen in Fig. 6 ist in Fig. 13 gezeigt. Dieser Regelungsstruktur verwendet zwei voneinander unabhängige Regler R1, R2, wobei ein erster Regler R1 für die Temperaturregelung auf den Grenzwert T_{1,limit} beim Anfahren der Zirkulationspumpe 1 und ein zweiter Regler R2 für die Temperaturregelung im geregelten Normalbetrieb zuständig ist. Es werden die Reglerausgänge miteinander verglichen. Der erste Regler R1 gibt eine erste Stellgröße, beispielsweise eine erste Drehzahl n1, und ein zweiter Regler R2 eine zweite Stellgröße, beispielswiese eine zweite Drehzahl n2 aus, wobei die erste und die zweite Stellgröße anschließend miteinander verglichen werden und die Größere von beiden zur Einstellung der Zirkulationspumpe 1 verwendet wird. Hierzu ist eine Umschaltlogik oder Umschalteinrichtung U (Block "Max") vorgesehen, der diesen Vergleich und die Auswahl der größeren Stellgröße durchführt. Die Umschaltlogik/ Umschalteinrichtung U entscheidet somit, welcher Regler verwendet wird. Dieser Ausführungsvariante hat den Vorteil, dass sie auch bei einer Differenztemperaturregelung verwendet werden kann, ohne diese in eine Konstanttemperaturregelung umzuformen. Eine solche Differenztemperaturregelung mit zwei Reglern R1, R2 basierend auf der Regelungsstruktur nach Fig. 13 ist in Fig. 14 gezeigt.

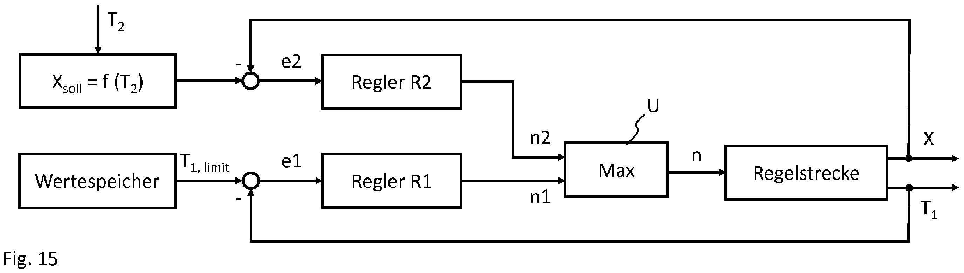

Die Regelungsstruktur nach Fig. 13 mit zwei Reglern R1, R2 ermöglicht außerdem eine Erweiterung des Anwendungsspektrums der erfindungsgemäßen Sollwertbegrenzung auf beliebige Regelungsarten, die im geregelten Normalbetrieb aktiv sein können. Dies veranschaulicht Fig. 15, die sich von der Ausführungsvariante in Fig. 14 darin unterscheidet, dass die Temperaturdifferenz ΔT durch eine beliebige Prozessgröße X ersetzt ist, deren Sollwert Xₛₒₗₗ von einer Medientemperatur T₂ abhängig ist. Eine solche Prozessgröße kann beispielsweise ein Druck oder ein Volumenstrom, beispielsweise ein sekundärseitiger Druck oder Volumenstrom sein. So regelt der erste Regler R1 im Rahmen einer Temperaturregelung den Grenzwert T_{1,limit} als Sollwert in der Anfahrphase der Zirkulationspumpe 1 ein, während der zweite Regler R2 anschließend im Normalbetrieb einen Sollwert Xₛₒₗₗ der Regelungsgröße X einregelt. Der Übergang von der Anfahrphase in den geregelten Normalbetrieb wird wieder durch die Umschaltlogik/ Umschalteinrichtung U (Block "Max") gesteuert und erfolgt, wenn der Stellwert n2 des zweiten Reglers R2 größer wird als der Stellwert n1 des ersten Reglers R1.

Fig. 17 zeigt eine verallgemeinerte Lösung der Umschaltlogik/ Umschalteinrichtung U in den Figuren 13 bis 15, die wahlweise anhand der Gültigkeit eines Umschaltkriteriums die erste oder zweite Drehzahl n1, n2 an den Ausgang gibt.

In einer noch allgemeineren Ausführungsvariante werden keine zwei Regler R1, R2 verwendet, vielmehr ist eine der beiden Drehzahlen n1, n2, beispielsweise die erste Drehzahl vorgegeben, insbesondere konstant. Sie kann beispielsweise durch die Maximaldrehzahl gebildet sein. Im Normalbetrieb erfolgt beispielsweise eine Temperaturdifferenzregelung. Während des Anfahrbetriebs läuft die Pumpe auf Maximaldrehzahl. Diese Lösung ist nahezu gleichwertig zur Umschaltung auf eine Konstanttemperaturregelung mit Deaktivierung der Sollwertlimitierung sobald T1,soll > T1 ,Limit wird.

Fig. 3b zeigt eine zur Fig. 3a alternative Anwendung mit einem Trinkwassererwärmer 6, wie zuvor erläutert, jedoch umfasst diese Variante zusätzliche Temperaturfühler im Trinkwarmwasserspeicher 16 oben (T4) und unten (T3). Alternativ kann auch nur ein einziger Speicherfühler verwendet werden. Im Normalbetrieb erfolgt hier eine Temperaturdifferenzregelung um ΔT13 zwischen Speicher unten (bzw. Speichermitte) und Rücklauf 9'. Zur Anfahroptimierung kann zusätzlich vorgesehen werden, dass die Temperatur T1 im Rücklauf höchstens um eine Temperaturdifferenz ΔT12 niedriger ist, als die Temperatur T2 im Vorlauf. Alternativ oder zusätzlich kann zur Anfahroptimierung vorgesehen werden, dass die Temperatur T2 im Vorlauf mindestens um ΔT24 höher als im Speicher 16 oben ist (bzw. Speichermitte). Die erfindungsgemäße Anfahrhilfe braucht in dieser Ausführungsvariante keine Temperaturhistorie zu verwenden.

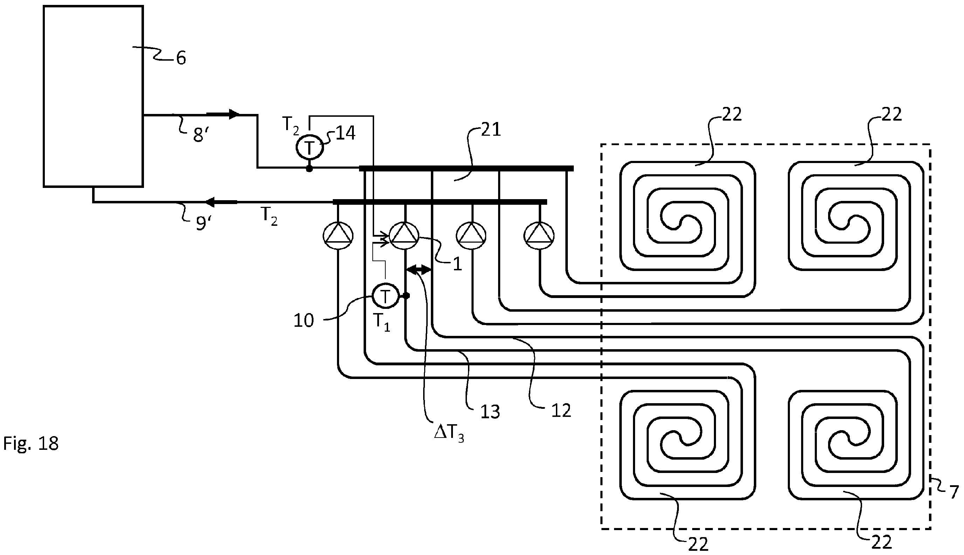

Fig. 18 veranschaulicht einen Anwendungsfall des erfindungsgemäßen Verfahrens bei einem Fußbodenheizungsverteiler 21 mit Heizkreisen in Form von Fußbodenschleifen 22 als Verbraucher 7 und dezentralen Pumpen 1 im jeweiligen Rücklauf 13. Ebenso können anstelle von Fußbodenschleifen 22 Radiatoren mit Anbindung über Wohnungsverteiler verwendet werden. Im Normalbetrieb erfolgt zusätzlich zur Raumtemperaturregelung eine Temperaturdifferenzregelung zwischen Vorlauf 12 und Rücklauf 13 jedes Heizkreises. Dies dient dem Ziel, den Volumenstrom zu begrenzen und damit einen hydraulischen Abgleich zwischen parallelgeschalteten Fußbodenschleifen 22 herzustellen. Im ausgeschalteten Zustand eines Heizkreises 22 gleicht sich die Wassertemperatur in seinen Vor- und Rücklaufleitungen an die Temperatur der benachbarten Vor- und Rücklaufleitungen an, da die Rohrleitungen eng nebeneinander und oftmals ohne Wärmedämmung verlegt sind. Zur Anfahrunterstützung wird erfindungsgemäß die Temperaturdifferenzregelung ausgeschaltet. Es ist nur die Raumtemperaturregelung aktiv. Während dessen wird der zeitliche Verlauf der Rücklauftemperatur T₁ beobachtet. Erst wenn diese zunächst abfällt und dann wieder zu steigen beginnt, liegt eine sinnvolle Rücklauftemperatur T₁ vor und die erfindungsgemäße Anfahrroutine wird beendet. Bei dieser Lösung erfolgt auch die Auswertung einer Temperaturhistorie, allerdings erfolgt die Umschaltung nicht aufgrund eines global historischen Extremwerts sondern eines lokalen, d.h. des aktuell auftretenden Extremums.

Fig. 19 zeigt ein Blockschaltbild für eine Temperaturdifferenzregelung nach dem Stand der Technik, wie sie zum Beispiel für Heizungs- oder Kühlanlagen nach Fig. 1, 2, oder 3a angewendet werden kann. Aus der von der Regelung beeinflussten Temperatur T₁ und der von der Regelung nicht (direkt) beeinflussten Temperatur T₂ wird die Temperaturdifferenz ΔT = T₁ - T₂ gebildet. Sie entspricht der Spreizung ΔT_{SP1}, ΔT_{SP2}, bzw. ΔT_{SP3}. Diese Ist-Temperaturdifferenz wird von der Soll-Temperaturdifferenz ΔTₛₒₗₗ abgezogen. Der so gebildete Regelfehler e wird vom Regelung verarbeitet. Dies kann zum Beispiel ein P-, PI-, PID- oder ein nichtlinearer Regler sein.

Fig. 20 zeigt ein Blockschaltbild für eine Doppel-Temperaturdifferenzregelung nach dem Stand der Technik, wie sie zum Beispiel für Heizungs- oder Kühlanlagen nach Fig. 4 angewendet werden kann. Aus der von der Regelung beeinflussten Temperatur T₁ und der von der Regelung nicht (direkt) beeinflussten Temperatur T₂ wird eine erste Temperaturdifferenz ΔT₁₂ = T₁ - T₂ gebildet. Aus der von der Regelung beeinflussten Temperatur T₃ und der von der Regelung nicht (direkt) beeinflussten Temperatur T₄ wird eine zweite Temperaturdifferenz ΔT₃₄ = T₄ - T₃ gebildet. Die erste Ist-Temperaturdifferenz wird von der zweiten Ist-Temperaturdifferenz abgezogen. Der so gebildete Regelfehler e wird von der Regelung verarbeitet. Diese kann zum Beispiel ein P-, PI-, PID- oder ein nichtlinearer Regler sein.

## Patentansprüche

1. Verfahren zum Betreiben einer Zirkulationspumpe (1) in einem Heizungs- oder Kühlungssystems, die bestimmungsgemäß in einem zumindest eine Medientemperatur eines Wärmeträgermediums des Heizungs- oder Kühlungssystems verwendenden, Normalbetrieb betrieben wird, **dadurch gekennzeichnet, dass** die Zirkulationspumpe (1) und ihr Normalbetrieb geregelt sind und die Zirkulationspumpe nach ihrem Einschalten in einer Anfahrphase anders als in dem auf die Anfahrphase folgenden Normalbetrieb betrieben wird, wobei während der Anfahrphase zumindest eine Medientemperatur bestimmt wird und ein Umschalten von der Anfahrphase auf den Normalbetrieb dann erfolgt, wenn zumindest ein die Medientemperatur berücksichtigendes Temperaturkriterium erfüllt ist.

2. Verfahren nach Anspruch 1, **dadurch gekennzeichnet, dass** im Normalbetrieb eine Temperaturregelung der Zirkulationspumpe (1) durchgeführt wird, bei der auf eine Soll-Medientemperatur oder eine Soll-Mediendifferenztemperatur geregelt wird.

3. Verfahren zumindest nach Anspruch 2, **dadurch gekennzeichnet, dass** die Temperaturregelung im Normalbetrieb eine als Konstanttemperaturregelung mit variablem Sollwert implementierte Differenztemperaturregelung ist, bei der eine erste Temperatur (T₁) eingeregelt wird, deren Sollwert (T_{1,soll}) von einer zweiten Temperatur (T₂) abhängig ist, wobei zwischen der ersten und der zweiten Temperatur (T₁, T₂) ein vorbestimmter Temperaturabstand (T_{SP1}, T_{SP2}, T_{SP3}) bestehen soll.

4. Verfahren nach einem der Ansprüche 1 bis 3, **dadurch gekennzeichnet, dass** der Verlauf der in der Anfahrphase bestimmten Medientemperatur mit zumindest einem erwarteten Temperaturverlauf verglichen wird, wobei das Temperaturkriterium erfüllt ist, wenn der Verlauf im Wesentlichen dem erwarteten Temperaturverlauf entspricht.

5. Verfahren nach Anspruch 4, **dadurch gekennzeichnet, dass** in zumindest einem vergangenen Normalbetrieb erfasste Temperaturwerte der Medientemperatur den erwarteten Temperaturverlauf bilden.

6. Verfahren nach einem der Ansprüche 1 bis 3, **dadurch gekennzeichnet, dass** im Normalbetrieb Temperaturwerte der Medientemperatur erfasst werden und aus diesen historischen Werten oder aus daraus abgeleiteten Werten zumindest ein Grenzwert (T_{1,lim}) ermittelt wird, der in dem Temperaturkriterium verwendet wird.

7. Verfahren zumindest nach Anspruch 2 und 6, **dadurch gekennzeichnet, dass** der Sollwert (T_{1,soll}) im Normalbetrieb ein zu erreichender Wert einer ersten Temperatur (T₁) eines Wärmeträgermediums des Heizungs- oder Kühlungssystems ist und die erste Temperatur (T₁) abhängig von einer zweiten Temperatur (T₂) ist, wobei im Betrieb der Zirkulationspumpe (1) Werte der ersten und/oder zweiten Temperatur (T₁, T₂) erfasst werden und aus diesen historischen Werten oder aus daraus abgeleiteten Werten der Grenzwert (T_{1,lim}) ermittelt wird.

8. Verfahren nach Anspruch 6 oder 7, **dadurch gekennzeichnet, dass** in der Anfahrphase eine Temperaturregelung der Zirkulationspumpe (1) durchgeführt wird und der ermittelte Grenzwert (T_{1,lim}) als Sollwert (T_{1,soll}) für die Temperaturregelung in der Anfahrphase eingestellt wird.

9. Verfahren nach eine der Ansprüche 6 bis 8, **dadurch gekennzeichnet, dass** der Grenzwert (T_{1,lim}) während des Anfahrvorgangs aufgrund erfasster neuer Temperaturwerte aktualisiert und unmittelbar als neuer Sollwert (T_{1,soll}) verwendet wird.

10. Verfahren nach Anspruch 8, **dadurch gekennzeichnet, dass** die Temperaturregelung im Normalbetrieb der Temperaturregelung in der Anfahrphase entspricht, wobei beim Umschalten auf den Normalbetrieb die Begrenzung des Sollwerts (T_{1,soll}) auf den Grenzwert (T_{1,lim}) aufgehoben wird.

11. Verfahren zumindest nach Anspruch 6, **dadurch gekennzeichnet, dass** das Temperaturkriterium erfüllt ist, wenn die in der aktuellen Anfahrphase bestimmte Medientemperatur im Heizfall mindestens größer oder im Kühlfall mindestens kleiner als der Grenzwert (T_{1,lim}) wird.

12. Verfahren zumindest nach den Ansprüchen 2 und 6, **dadurch gekennzeichnet,** das Temperaturkriterium erfüllt ist, wenn der Sollwert der Temperaturregelung im Normalbetrieb den Grenzwert (T_{1,lim}) im Falle eines Heizungssystems überschreitet oder im Falle eines Kühlungssystems unterschreitet.

13. Verfahren zumindest nach Anspruch 6 oder 7, **dadurch gekennzeichnet, dass** die im Normalbetrieb erfassten Temperaturwerte nur über einen begrenzten, fortschreitenden Zeitraum (D) hinweg erfasst werden.

14. Verfahren nach Anspruch 13, **dadurch gekennzeichnet, dass** das Fortschreiten des Zeitraums (D) angehalten wird, solange die Zirkulationspumpe (1) gestoppt ist.

15. Zirkulationspumpe (1) mit einem elektrischen Antriebsmotor, zumindest einem von diesem angetriebenen Laufrad sowie mit einer Pumpenelektronik zur Steuerung und/oder Regelung des Antriebsmotors, **dadurch gekennzeichnet, dass** die Pumpenelektronik eingerichtet ist, das Verfahren nach einem der Ansprüche 1 bis 14 auszuführen.

## Claims

1. Method for the operation of a circulation pump (1) in a heating or cooling system, intended for operation in a normal operating mode using at least one media temperature of a heat transfer medium of the heating or cooling system, **characterised by** the circulation pump (1) and its normal operation being controlled and the circulation pump, after it is started, being operated differently in a starting-up phase than during normal operation following the starting-up phase, in which at least one media temperature is determined during the starting-up phase and switching from the starting-up phase to normal operation takes place when at least one temperature criterion that takes the media temperature into account is met.

2. Method according to claim 1, **characterised by** temperature control of the circulation pump (1) being carried out during normal operation, adjusting to a set media temperature or a set media temperature difference.

3. Method according to at least claim 2, **characterised by** temperature control during normal operation being differential temperature control implemented as constant temperature control with a variable setpoint value, which adjusts to a first temperature (T₁) for which the setpoint value (T_{1,soll}) is dependent on a second temperature (T₂), in which there is a predetermined temperature difference (T_{SP1}, T_{SP2}, T_{SP3}) between the first and second temperature (T₁, T₂).

4. Method according to one of the claims 1 through 3, **characterised by** the profile of the media temperature determined in the starting-up phase being compared to at least one expected temperature profile, in which the temperature criterion is met when the profile essentially corresponds to the expected temperature profile.

5. Method according to claim 4, **characterised by** media temperature values recorded during normal operation, at least once in the past, forming the expected temperature profile.

6. Method according to one of the claims 1 through 3, **characterised by** media temperature values being recorded during normal operation and at least one limit value (T_{1,lim}) that is used in the temperature criterion being determined from these historical values or values derived from them.

7. Method according to at least claims 2 and 6, **characterised by** the setpoint value (T_{1,soll}) during normal operation being a value of a first temperature (T₁) of a heat transfer medium of the heating or cooling system that is to be reached and the first temperature (T₁) being dependent on a second temperature (T₂), in which values of the first and/or second temperature (T₁, T₂) are recorded during operation of the circulation pump (1) and the limit value (T_{1,lim}) is determined from these historical values or values derived from them.

8. Method according to claim 6 or 7, **characterised by** temperature control of the circulation pump (1) being carried out during the starting-up phase and the limit value (T_{1,lim}) that is determined being set as the setpoint value (T_{1,soll}) for temperature control in the starting-up phase.

9. Method according to one of the claims 6 through 8, **characterised by** the limit value (T_{1,lim}) being updated during the start-up process based on recorded new temperature values and being used directly as the new setpoint value (T_{1,soll}).

10. Method according to claim 8, **characterised by** temperature control during normal operation corresponding to temperature control in the starting-up phase, in which the limit for the setpoint value (T_{1,soll}) is increased to the limit value (T_{1,lim}) when switching to normal operation.

11. Method according to at least claim 6, **characterised by** the temperature criterion being met when the media temperature determined during the current starting-up phase becomes, in the heating case at least greater than or in the cooling case at least less than, the limit value (T_{1,lim}).

12. Method according to at least claims 2 and 6, **characterised by** the temperature criterion being met when the setpoint value for temperature control during normal operation, in the case of a heating system exceeds or in the case of a cooling system falls below, the limit value (T_{1,lim}).

13. Method according to at least claim 6 or 7, **characterised by** the temperature values recorded during normal operation being recorded only over a limited, progressive time period (D).

14. Method according to claim 13, **characterised by** the progression of the time period (D) being paused as long as the circulation pump (1) is stopped.

15. Circulation pump (1) with an electric drive motor, at least one impeller driven by the motor and pump electronics for the closed-loop and/or open-loop control of the drive motor, **characterised by** the pump electronics being configured to execute the method according to one of the claims 1 through 14.

## Revendications

1. Procédé de fonctionnement d'une pompe de circulation (1) dans un système de chauffage ou de refroidissement, exploitée conformément à sa destination dans un fonctionnement normal utilisant au moins une température de fluide d'un fluide caloporteur du système de chauffage ou de refroidissement, **caractérisé en ce que** la pompe de circulation (1) et son fonctionnement normal sont régulés et que la pompe de circulation après sa mise en marche fonctionne dans une phase de démarrage différemment du fonctionnement normal suivant la phase de démarrage, sachant qu'au moins une température de fluide est déterminée pendant la phase de démarrage et qu'une commutation de la phase de démarrage au fonctionnement normal a lieu lorsqu'au moins un critère de température tenant compte de la température du fluide est rempli.

2. Procédé selon la revendication 1, **caractérisé en ce que,** en fonctionnement normal, une régulation de température de la pompe de circulation (1) est effectuée, dans laquelle une régulation est effectuée sur une température du fluide nominale ou une température différentielle du fluide.

3. Procédé au moins selon la revendication 2, **caractérisé en ce que** la régulation de température en fonctionnement normal est une régulation de température différentielle implémentée comme régulation de température constante avec une valeur nominale variable, dans laquelle une première température (T₁) est réglée, dont la valeur nominale (T_{1,soll}) dépend d'une deuxième température (T₂), sachant qu'un écart de température prédéterminé (T_{SP1}, T_{SP2}, T_{SP3}) devant exister entre la première et la deuxième température (T₁, T₂).

4. Procédé selon l'une des revendications 1 à 3, **caractérisé en ce que** l'évolution de la température du fluide déterminée lors de la phase de démarrage est comparée à au moins une évolution de température attendue, sachant que le critère de température est satisfait si l'évolution correspond sensiblement à l'évolution de température attendue.

5. Procédé selon la revendication 4, **caractérisé en ce que** des valeurs de température du fluide enregistrées au cours d'au moins un fonctionnement normal passé forment l'évolution de température attendue.

6. Procédé selon l'une des revendications 1 à 3, **caractérisé en ce que,** en fonctionnement normal, des valeurs de température du fluide sont enregistrées et au moins une valeur limite (T_{1,lim}) est déterminée à partir de ces valeurs historiques ou de valeurs qui en sont dérivées, laquelle est utilisée dans le critère de température.

7. Procédé au moins selon les revendications 2 et 6, **caractérisé en ce que** la valeur nominale (T_{1,soll}) en fonctionnement normal est une valeur à atteindre d'une première température (T₁) d'un fluide caloporteur du système de chauffage ou de refroidissement et la première température (T₁) dépend d'une deuxième température (T₂), sachant que des valeurs de la première et/ou de la deuxième température (T₁, T₂) sont enregistrées pendant le fonctionnement de la pompe de circulation (1) et que la valeur limite (T_{1,lim}) est déterminée à partir de ces valeurs historiques ou de valeurs qui en sont dérivées.

8. Procédé selon la revendication 6 ou 7, **caractérisé en ce que,** dans la phase de démarrage, une régulation de température de la pompe de circulation (1) est effectuée et la valeur limite (T_{1,lim}) déterminée est réglée comme valeur nominale (T_{1,soll}) pour la régulation de température dans la phase de démarrage.

9. Procédé selon l'une des revendications 6 à 8, **caractérisé en ce que** la valeur limite (T_{1,lim}) est actualisée pendant le processus de démarrage sur la base de nouvelles valeurs de température déterminées et est utilisée directement comme nouvelle valeur nominale (T_{1,soll}).

10. Procédé selon la revendication 8, **caractérisé en ce que** la régulation de température en fonctionnement normal correspond à la régulation de température en phase de démarrage, sachant que, lors du passage au fonctionnement normal, la limitation de la valeur nominale (T_{1,soll}) à la valeur limite (T_{1,lim}) est supprimée.

11. Procédé au moins selon la revendication 6, **caractérisé en ce que** le critère de température est satisfait si la température du fluide déterminée dans la phase de démarrage actuelle devient au moins supérieure à la valeur limite (T_{1,lim}) en cas de chauffage ou au moins inférieure en cas de refroidissement.

12. Procédé au moins selon les revendications 2 et 6, **caractérisé en ce que** le critère de température est satisfait lorsque la valeur nominale de la régulation de température en fonctionnement normal dépasse la valeur limite (T_{1,lim}) dans le cas d'un système de chauffage ou est inférieure à celle-ci dans le cas d'un système de refroidissement.

13. Procédé au moins selon la revendication 6 ou 7, **caractérisé en ce que** les valeurs de température enregistrées en fonctionnement normal ne sont enregistrées que sur une période limitée et progressive (D).

14. Procédé selon la revendication 13, **caractérisé en ce que** la progression de la période (D) est arrêtée tant que la pompe de circulation (1) est arrêtée.

15. Pompe de circulation (1) avec un moteur d'entraînement électrique, au moins une roue mobile entraînée par celui-ci ainsi qu'avec une électronique de pompe pour la commande et/ou la régulation du moteur d'entraînement, **caractérisée en ce que** l'électronique de pompe est agencée pour exécuter le procédé selon l'une des revendications 1 à 14.
